# EUROPÄISCHE PATENTSCHRIFT

(11) **EP 4 151 505 B1**
(45) Veröffentlichungstag und Bekanntmachung des Hinweises auf die Patenterteilung: **20.08.2025**
(21) Anmeldenummer: 22195272.4
(22) Anmeldetag: 13.09.2022
(51) Int. Cl.: B62D 21/12, B60P 3/40, B62D 63/06, B62D 13/02, B62D 21/14, B62D 21/20

(54) **TRANSPORTFAHRZEUG MIT VARIABLER BREITE UND SPURBREITE**
TRANSPORT VEHICLE WITH VARIABLE WIDTH AND TRACK WIDTH
VÉHICULE DE TRANSPORT À LARGEUR ET LARGEUR DE VOIE VARIABLES

(30) Priorität: 15.09.2021 DE 102021004669; 15.09.2021 DE 202021002956 U
(43) Veröffentlichungstag der Anmeldung: 22.03.2023
(73) Patentinhaber: Scheuerle Fahrzeugfabrik GmbH, 74629 Pfedelbach (DE)
(72) Erfinder: Singer, Christian, 74629 Pfedelbach (DE); Dückmann, Peter, 74629 Pfedelbach (DE); Petzold, Steffen, 74629 Pfedelbach (DE)
(74) Vertreter: Ullrich & Naumann PartG mbB

(56) Entgegenhaltungen:
- EP-A1- 2 394 835
- EP-A1- 2 931 585
- EP-A1- 3 152 102
- EP-A1- 4 052 994
- EP-A2- 1 957 348
- DE-A1- 2 219 447
- DE-B3- 102015 004 288

## Beschreibung

Die Erfindung betrifft ein Transportfahrzeug mit variabler Breite und Spurweite, welches ein Fahrgestell mit mindestens zwei Lenkachsen besitzt, wobei das Fahrgestell zwei Fahrgestellteile umfasst, die jeweils eine Reihe von hintereinander angeordneten Fahrwerken jeweils mit mindestens einem Rad-Drehgestell tragen, welche quer zu einer vertikalen Längsmittelebene des Transportfahrzeugs verstellbar sind, wobei vorzugsweise an einer Querseite des Transportfahrzeugs eine Kupplungsvorrichtung mit einem verschwenkbaren Kupplungselement angeordnet ist, über welches das Transportfahrzeug an ein das Transportfahrzeug bewegendes Zug- oder Schubfahrzeug ankoppelbar ist.

Die DE 10 2012 024 247 B4 und EP 1 957 348 der Anmelderin beschreibt ein derartiges Transportfahrzeug mit variabler Breite und Spurweite, welches ein Fahrgestell mit mindestens einer Lenkachse aufweist. Das Fahrgestell umfasst ein als Kastenträger ausgebildeten mittleren Längsträger, der sich entlang einer vertikalen Längsmittelebene des Transportfahrzeugs erstreckt, zwei seitliche Längsträger, die parallel zur Längsmittelebene ausgerichtet und beiderseits des mittleren Längsträgers angeordnet sind, sowie eine Anzahl von Querträgern, die paarweise miteinander fluchten, den mittleren Längsträger mit den seitlichen Längsträgern verbinden und senkrecht zur vertikalen Längsmittelebene ausgerichtet sind. Die Querträger sind teleskopierbar ausgebildet und umfassen jeweils zwei ineinander geschobene Hohlprofile mit Rechteck-Querschnitt, von denen jeweils das äußere Hohlprofil starr mit dem mittleren Längsträger verbunden ist, während das im Inneren des äußeren Hohlprofils verschiebbare innere Hohlprofil starr mit einem der seitlichen Längsträger verbunden ist. Die äußeren Hohlprofile des vordersten und des hintersten Querträgers des Fahrzeugs sind jeweils zu einem hohlen Kastenträger verbunden, der ein Kupplungselement zum Kuppeln des Lasttragteils mit einem weiteren Fahrzeug bildet. Oberhalb von jedem der vier an entgegengesetzten Enden des Fahrzeugs angeordneten Querträgern ist jeweils ein Hydraulikzylinder angeordnet, dessen Zylinderrohr mit dem äußeren Hohlprofil und damit mit dem mittleren Längsträger verbunden ist, während seine Kolbenstange mit dem inneren Hohlprofil und damit mit einem der beiden seitlichen Längsträger verbunden ist. Zur Veränderung der Breite und Spurweite des Fahrzeugs werden die Kolbenstangen aller vier Hydraulikzylinder ein- bzw. ausgefahren, um den seitlichen Abstand zwischen dem mittleren Längsträger und den beiden seitlichen Längsträgern unter Teleskopieren der Querträger nach Bedarf zu vergrößern oder zu verkleinern. Die beiden Fahrgestellteile tragen jeweils eine Reihe von hintereinander angeordneten Rad-Drehgestellen, welche durch Längsspurstangen verbunden sind. Zwischen den beiden Reihen von Rad-Drehgestellen ist nur eine einzige längenverstellbare Querspurstange angeordnet, die zwei Rad-Drehgestelle von der oder einer der Lenkachsen verbindet und deren Länge um ein dem Maß der Vergrößerung oder Verkleinerung der Breite und Spurweite entsprechendes Maß verstellbar ist. Die Querspurstange verbindet zwei Lenkhebel, die jeweils zwischen zwei benachbarten Rad-Drehgestellen an einem der beiden Fahrgestellteile angelenkt sind. Zur Verstellung der Breite und der Spurweite des aus der vorgenannten Druckschrift bekannten Transportfahrzeugs ist eine relativ aufwendige Konstruktion mit Querträgern, die zwei ineinander geschobene Hohlprofile mit Rechteck-Querschnitt aufweisen, sowie mehrere Hydraulikzylinder, mittels derer die vorstehend ausgebildeten Hohlprofilträger teleskopierbar sind, erforderlich. Die Querträger müssen dabei hinreichend stabil ausgebildet sein, damit auch bei einem Transportfahrzeug mit einer durch ein Auseinanderfahren der Querträger bewirkten großen Breite und Spurweite eine hinreichend Stabilität des Transportfahrzeugs gegeben ist.

Aus der US 4,221,398 A ist ein Transportfahrzeug in Form eines Deichselanhängers und eines Tiefladers mit mehreren Lenkachsen bekannt, dessen Breite und Spurweite bei Bedarf vergrößert bzw. verkleinert werden können, indem zwei Fahrgestellteile, die jeweils eine Reihe von Rad-Drehgestellen tragen, quer zur Fahrtrichtung bzw. zu einer vertikalen Längsmittelebene des Transportfahrzeugs auseinander bzw. zusammenbewegt werden. Die Rad-Drehgestelle jeder Lenkachse werden dort unabhängig voneinander mittels getrennter Lenkzylinder gelenkt, die in jedem der beiden Fahrgestellteile angeordnet sind. Dadurch werden jedoch zum einen übermäßig viele Lenkzylinder für die Lenkung benötigt und zum anderen kann nicht gewährleistet werden, dass beim Lenken der Lenkwinkel der beiden Rad-Drehgestelle jeder Lenkachse und damit die Einschlagwinkel der zugehörigen Räder oder Radpaare identisch sind.

Zur Lenkung der beiden Rad-Drehgestelle der beiden Fahrgestellteile sind zwei Steuerzylinder vorgesehen, deren kolbenseitiges Ende jeweils an dem entsprechenden Fahrgestellteil und deren ringseitiges Ende an einer schwenkbar an einem die beiden Fahrgestellteile verbindenden Querträger angeordnet ist. Eine Verschwenkbewegung der Zuggabel bewirkt somit, dass ein Zylinder eines der beiden Steuerzylinder ausgefahren und der anderen Zylinder eingefahren wird. Die beiden Steuerzylinder sind jeweils mit korrespondierenden Lenkzylindern über Hydraulikleitungen verbunden. Ein kolbenseitiges Ende eines jeden der beiden Lenkzylinders ist an dem entsprechenden Fahrgestellteil angelenkt und ein ringseitiges Ende dieser Lenkzylinder ist jeweils mit einem ersten Ende eines Lenkhebels verbunden, wobei jeder dieser beiden Lenkhebel über sein zweites Ende mit der entsprechenden Rad-Drehanordnung verbunden ist. Eine erste Hydraulikleitung des in Fahrtrichtung linken Steuerzylinders führt vom kolbenseitigen Ausgang dieses Zylinders zu einem kolbenseitigen Eingang des in Fahrtrichtung rechten Lenkzylinders. In entsprechender Art und Weise ist ein kolbenseitiger Ausgang des rechten Steuerzylinders mit einem kolbenseitigen Eingang des linken Lenkzylinders verbunden. Eine weitere Hydraulikleitung führt vom ringseitigen Ausgang des linken Lenkzylinders zum ringseitigen Eingang des rechten Lenkzylinders. Das bekannte Transportfahrzeug weist außer der vorstehend beschriebenen Lenkachse noch eine mittlere Lenkachse und eine hintere Lenkachse mit jeweils einer Rad-Drehanordnung auf. Der Lenkhebel eines jeden Fahrgestellteils der vorderen Lenkachse ist jeweils über eine Längsspurstange mit einem ersten Ende eines Lenkhebels der mittleren Lenkachse verbunden und die jeweils zweiten Enden dieser Lenkhebel sind über eine mechanische Verbindung mit der entsprechenden Rad-Drehanordnung gekoppelt. Jeweils eine dritte Längsspurstange führt vom jeweils zweiten dieser beiden Lenkhebel zu einem ersten Ende der beiden Hebel der Lenkachse, welche wiederum über entsprechende Spurstangen mechanisch mit den Rad-Drehanordnungen der hinteren Lenkachse verbunden sind. Jeweils ein zweites Ende der beiden Lenkhebel der hinteren Lenkachse ist mit einer Kolbenstange von weiteren Lenkzylindern verbunden, deren jeweils anderes Ende mit einem hinteren Querträger verbunden ist. Eine weitere Hydraulikleitung führt vom ringseitigen Ausgang des linken Steuerzylinders zum ringseitigen Eingang des rechten hinteren Lenkzylinders und in entsprechender Art und Weise ist ein ringseitiger Ausgang des vorderen rechten Steuerzylinders mit einem ringseitigen Eingang des linken hinteren Lenkzylinders verbunden. Eine weitere Hydraulikleitung verbindet die kolbenseitigen Ausgänge dieser beiden Lenkzylinder. Nachteilig bei dieser bekannten Lenkung ist, dass mit den in der vorgenannten Druckschrift beschriebenen Maßnahmen nur ein Lenkkreis ausgebildet werden kann, welcher auch nur eine geringe Lenkkraft erzeugen kann.

Es ist daher Aufgabe der vorliegenden Erfindung, ein Transportfahrzeug der eingangs genannten Art derart weiterzubilden, dass in einfacher Art und Weise eine Veränderung der Breite und der Spurweite erzielbar ist.

Diese Aufgabe wird durch das erfindungsgemäße Transportfahrzeug dadurch gelöst, dass das mittlere Fahrgestellteil auswechselbar im Transportfahrzeug aufgenommen ist und einen in Längsrichtung des Transportfahrzeugs verlaufenden Träger aufweist, und dass an mindestens einer und vorzugsweise an beiden Seitenflächen dieses Trägers Verbindungsmittel vorgesehen sind, mittels derer mindestens das erste und/oder das zweite Fahrgestellteil über zu diesen Verbindungsmitteln komplementäre Verbindungsmittel am mittleren Fahrgestellteil mechanisch festlegbar ist.

Durch die erfindungsgemäßen Maßnahmen wird in vorteilhafter Art und Weise ein Transportfahrzeug geschaffen, welches sich durch seine einfache Verstellbarkeit in seiner Breite und Spurweite auszeichnet. Indem nun erfindungsgemäß vorgesehen ist, dass die Verbreiterung des Transportfahrzeugs durch ein Auswechseln des die beiden äußeren Fahrgestellteile verbindenden mittleren Fahrgestellteils, welches auswechselbar im erfindungsgemäßen Transportfahrzeug angeordnet ist, wird eine einfache Bauweise desselben erreicht. Es ist nun nicht mehr - wie bei dem eingangs genannten Fahrzeug - erforderlich, zur Verstellung der Breite und Spurweite teleskopierbare Querträger einzusetzen, welche den mechanischen Aufbau verteuern. Indem nun vorgesehen ist, dass das mittlere Fahrgestellteil mit den beiden äußeren Fahrgestellteilen durch entsprechende Verbindungsmittel - insbesondere ohne Verwendung von Querträgern, welche von diesem mittleren Fahrgestellteil abstehen - verbunden ist, wird nicht nur ein vereinfachter Aufbau des erfindungsgemäßen Transportfahrzeugs erreicht, sondern es wird auch in vorteilhafter Art und Weise die Steifigkeit des Fahrgestells und somit die Traglast des erfindungsgemäßen Transportfahrzeugs erhöht.

Eine vorteilhafte Weiterbildung der Erfindung sieht vor, dass der Träger des mittleren Fahrgestellteils ein oder mehrere in Längsrichtung des Transportfahrzeugs hintereinander angeordnete Träger-Segmente aufweist. Eine derartige Maßnahme besitzt den Vorteil, dass hierdurch ein modularer Aufbau des mittleren Längsträgers des mittleren Fahrgestellteils ermöglich ist.

Eine weitere vorteilhafte Weiterbildung der Erfindung sieht vor, dass zur Verbreiterung des mittleren Fahrgestellteils an mindestens einer Seitenfläche des Trägers des mittleren Fahrgestellteils oder mindestens eines Träger-Segments dieses Trägers ein Zwischenelement auswechselbar angeordnet ist. Eine derartige Maßnahme besitzt den Vorteil, dass die Verbreiterung des mittleren Trägers des mittleren Fahrgestellteils in einfacher Art und Weise dadurch erzielbar ist, indem ein oder mehrere der vorgenannten Zwischenelemente an einer oder an beiden Seiten des Trägers angeordnet sind, so dass der hierdurch ausgebildete Gesamt-Träger infolge der Zwischenelemente eine größere Breite aufweist als der anfängliche Träger. Eine derartige Maßnahme besitzt wieder den Vorteil, dass das erfindungsgemäße Transportfahrzeug modular an unterschiedliche Breiten und Spurweiten angepasst werden kann.

Eine weitere vorteilhafte Weiterbildung der Erfindung sieht vor, dass der Träger des mittleren Fahrgestellteils eine Durchtrittsöffnung aufweist, durch welche elektrische und/oder mechanische Steuerelemente eines der beiden Fahrgestellteile zum anderen Fahrgestellteil durchführbar sind. Eine derartige Maßnahme besitzt den Vorteil, dass die beiden äußeren Teile in einfacher Art und Weise durch mechanische und/oder elektrische Steuerelemente, z. B. einen Querträger, der die beiden Reihen von Fahrwerken der jeweiligen Fahrgestellteile miteinander verbindet, durch den mittleren Träger hindurchführbar sind.

Eine weitere vorteilhafte Weiterbildung der Erfindung sieht vor, dass am mittleren Fahrgestellteil und insbesondere am Träger des mittleren Fahrgestellteils eine Kupplungsvorrichtung angeordnet ist.

Eine weitere vorteilhafte Weiterbildung der Erfindung sieht vor, dass an einer Querseite des Transportfahrzeugs, insbesondere an einem Ende des mittleren Fahrgestellteils und hierbei insbesondere am Träger des mittleren Fahrgestellteils, eine Kupplungsvorrichtung mit einem verschwenkbaren Kupplungselement angeordnet ist, über welches das Transportfahrzeug an ein dieses bewegende Zug- oder Schubfahrzeug ankoppelbar ist. Gemäß einer bevorzugten Ausgestaltung besitzt die Kupplungsvorrichtung mindestens vier Steuerzylinder, wobei mindestens zwei Steuerzylinder mit ihrem ringseitigen Ende über Kolbenstangen an einer ersten Seite des verschwenkbaren Kupplungselements und mit ihrem kolbenseitigen Ende mit der Kupplungsvorrichtung und mindestens zwei Steuerzylinder mit ihrem ringseitigen Ende über Kolbenstangen mit einer zweiten Seite des verschwenkbaren Kupplungselements und mit ihrem kolbenseitigen Ende mit der Kupplungsvorrichtung verbunden sind, dass die ersten Fahrwerke und die zweiten Fahrwerke jeweils einen Lenkzylinder besitzen, wobei ein erster Lenkzylinder an einer ersten Rad-Drehanordnung und ein zweiter Lenkzylinder jeweils an einer zweiten Rad-Drehanordnung angelenkt ist, derart, dass jeweils ein kolbenseitiges Ende des entsprechenden Lenkzylinders am Fahrgestell verbunden ist und ein ringseitiges Ende über eine entsprechende Kolbenstange auf das Lenkelement der entsprechenden Rad-Drehanordnung einwirkt, und dass jeweils eine kolbenseitige Anschlussöffnung eines Steuerzylinders mit einer kolbenseitigen Anschlussöffnung des diesem Steuerzylinder zugeordneten Lenkzylinders und eine ringseitige Anschlussöffnung dieses Lenkzylinders mit einer ringseitigen Anschlussöffnung dieses Steuerzylinders über entsprechende Hydraulikleitungen verbunden ist. Diese erfindungsgemäßen Maßnahmen besitzen den Vorteil, dass hierdurch eine Lenkvorrichtung für ein Transportfahrzeug mit mindestens zwei aktiven Lenkkreisen geschaffen wird, welches sich auch dadurch auszeichnet, dass in einfacher Art und Weise eine erhöhte Lenkkraft erzielt wird. Die erfindungsgemäßen Maßnahmen bewirken, dass die kolbenseitigen Ausgänge der Steuerzylinder immer mit den kolbenseitigen Eingängen der korrespondierenden Lenkzylinder verbunden sind; die Lenkung der aktiven Fahrwerke erfolgt somit über die Kolbenfläche der Steuerzylinder und der Lenkzylinder. Dadurch wird in vorteilhafter Art und Weise die maximal aufzubringende hydraulische und somit auch mechanische Lenkkraft erzielt. Von Vorteil hierbei ist, dass die Ringflächen der Steuerzylinder und die Ringflächen der Lenkzylinder verbunden sind, was in einer Stabilisierung und Synchronisierung des jeweiligen Lenkkreises resultiert. Ein weiterer Vorteil ist, dass durch die erfindungsgemäßen Maßnahmen eine Zweikreislenkung ausgebildet wird, welche sich durch eine erhöhte Lenksicherheit auszeichnet: Wird z. B. die kolbenseitige hydraulische Verbindung zwischen einem Lenkzylinder und einem Steuerzylinder unterbrochen, so wird die Lenkeinheit durch die ringseitige hydraulische Verbindung weiterhin gehalten. Einem Ausbrechen des Transportfahrzeugs durch einen derartigen Defekt wird daher wirksam entgegengewirkt. Das erfindungsgemäße Transportfahrzeug darf daher (nach den zur Zeit in Deutschland geltenden gesetzlichen Vorschriften) mit einer Geschwindigkeit bis zu 80 km/h gefahren werden. Ein weiterer Vorteil ist, dass die Kupplungsvorrichtung nicht direkt an dem Transportfahrzeug angebaut und mechanisch mit der die Fahrwerke dieses Transportfahrzeugs bewegenden Lenkung verbunden sein muss. Durch das beschriebene hydraulische Ansteuern der Lenkung können zwischen der Kupplungseinrichtung und dem Fahrwerk des erfindungsgemäßen Transportfahrzeugs in vorteilhafter Art und Weise z. B. Adapter oder Längsträger ohne integrierte Lenkung eingekuppelt werden und mittels geeigneter Hydraulikleitungen überbrückt werden, um auf die Lenkungshydraulik des Transportfahrzeugs zu gelangen. Ein weiterer Vorteil der erfindungsgemäßen Maßnahmen ist, dass die erfindungsgemäße Lenkvorrichtung in vorteilhafter Art und Weise für Transportfahrzeuge mit fixer und insbesondere für Transportfahrzeuge mit variabler Breite geeignet ist.

Eine weitere vorteilhafte Weiterbildung der Erfindung sieht vor, dass mindestens ein an einer ersten Seite des Fahrgestells angeordneter Steuerzylinder der Lenkung des erfindungsgemäßen Transportfahrzeugs mit einem an der gleichen Seite des Fahrgestells angeordneten Lenkzylinder hydraulisch verbunden ist.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, welches im Folgenden anhand der Figuren beschrieben wird. Es zeigen:
- Figur 1: eine perspektivische Darstellung eines Ausführungsbeispiels eines Transportfahrzeugs,
- Figuren 2a und 2b: jeweils eine Explosionsdarstellung des Ausführungsbeispiels der Figur 1,
- Figur 3: eine Draufsicht auf das Ausführungsbeispiel der Figur 1,
- Figur 4: eine Seitenansicht des Ausführungsbeispiels der Figur 1,
- Figur 5: einen Schnitt entlang der Linie A-A der Figur 4,
- Figur 6: eine Ansicht des Ausführungsbeispiels aus der Richtung B der Figur 4,
- Figur 7: eine Draufsicht auf das Transportfahrzeug der Figuren 1 bis 3 ohne Transportfläche in einer ersten Stellung einer Zuggabel,
- Figur 8: eine Draufsicht auf das Transportfahrzeug der Figuren 1 und 3 ohne Transportfläche in einer zweiten Stellung der Zuggabel,
- Figur 9: eine perspektivische Ansicht eines Zuggabelkupplungselements,
- Figur 10: eine Draufsicht auf das Zuggabelkupplungselement der Figur 9,
- Figur 11: eine Vorderansicht des Zuggabelkupplungselements der Figur 9,
- Figur 12: eine Seitenansicht des Zuggabelkupplungselements,
- Figuren 13 und 14: eine schematische Darstellung einer ersten Variante der beiden Lenckreisläufe des Transportfahrzeugs,
- Figur 15: eine schematische Darstellung einer zweiten Variante der beiden Lenkkreisläufe des Transportfahrzeugs, und
- Figur 16: eine schematische Darstellung der Lenkanordnung bei einem verbreiterten Transportfahrzeug.

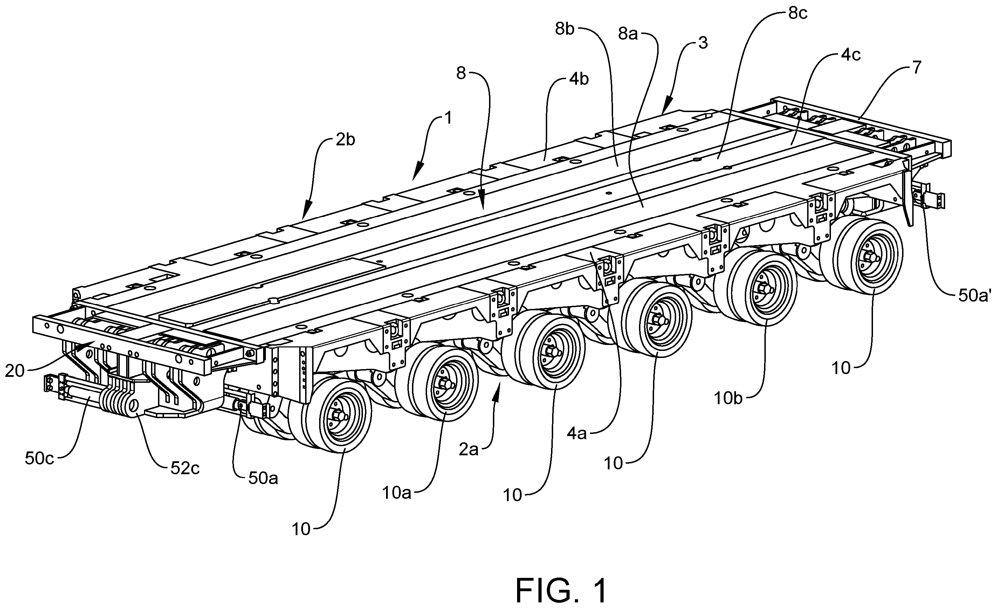

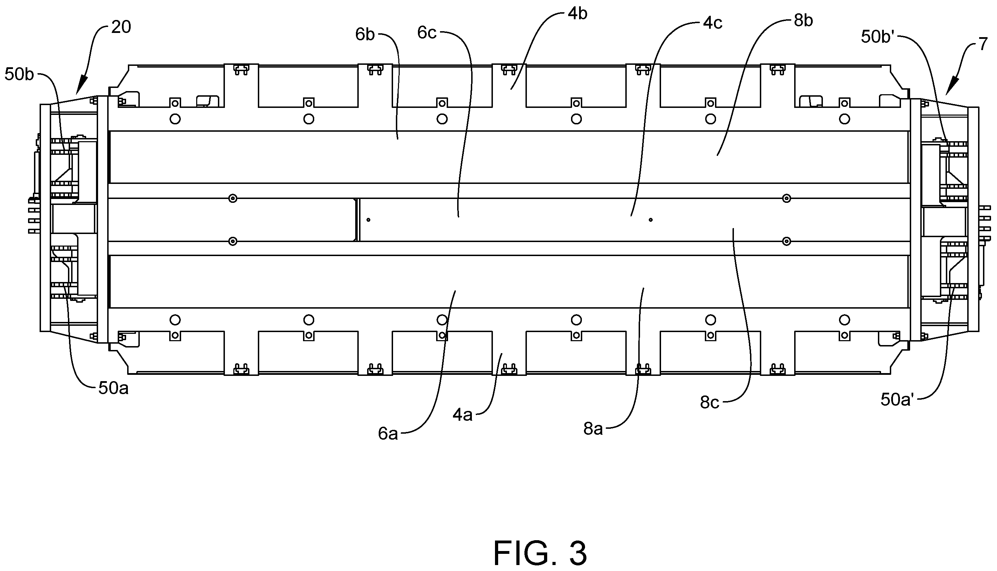

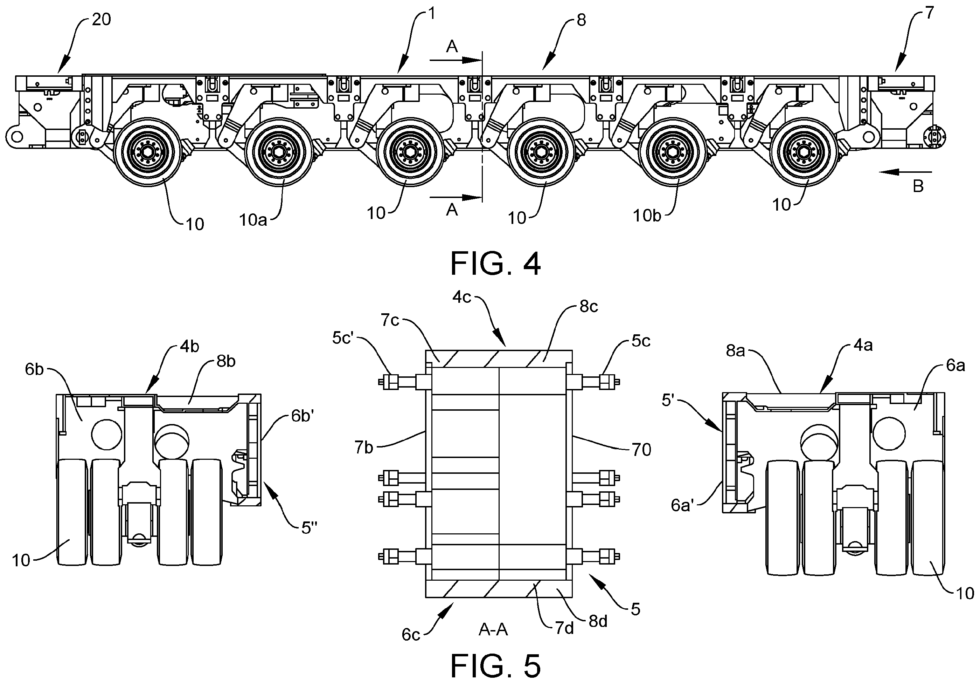

In den Figuren 1 bis 8 ist ein Ausführungsbeispiel eines allgemein mit 1 bezeichneten Transportfahrzeugs dargestellt, welches ein Fahrgestell 3 besitzt, an dem eine Anzahl von Fahrwerken 10, 10a, 10a' sowie 10b und 10b' angeordnet sind.

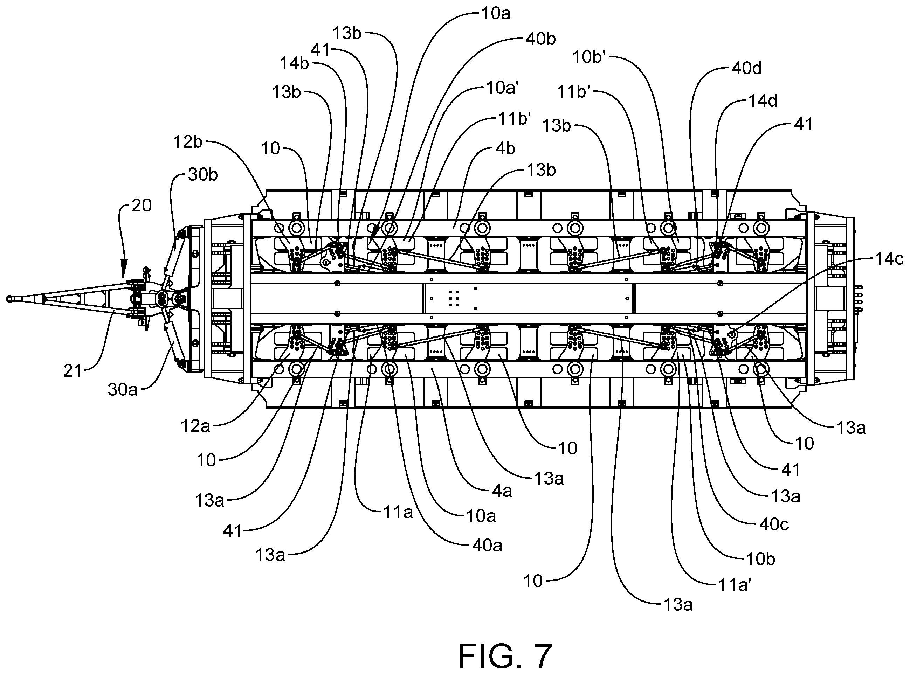

An einer vorderen Querseite des Fahrgestells 3 des Transportfahrzeugs 1 ist eine Kupplungsvorrichtung 20 - hier eine Zuggabelkupplungsvorrichtung - mit einem Lenkelement, hier mit einer Zuggabel 21 (in den Figuren 1 bis 6 nicht gezeigt; siehe Figur 7), vorgesehen, welche nachstehend noch im Detail erörtert wird. An einer hinteren Querseite des zweiten Fahrzeugmoduls 2b ist eine weitere Kupplungsvorrichtung 7 vorgesehen, welche bekannt ist und daher nicht mehr näher erläutert wird.

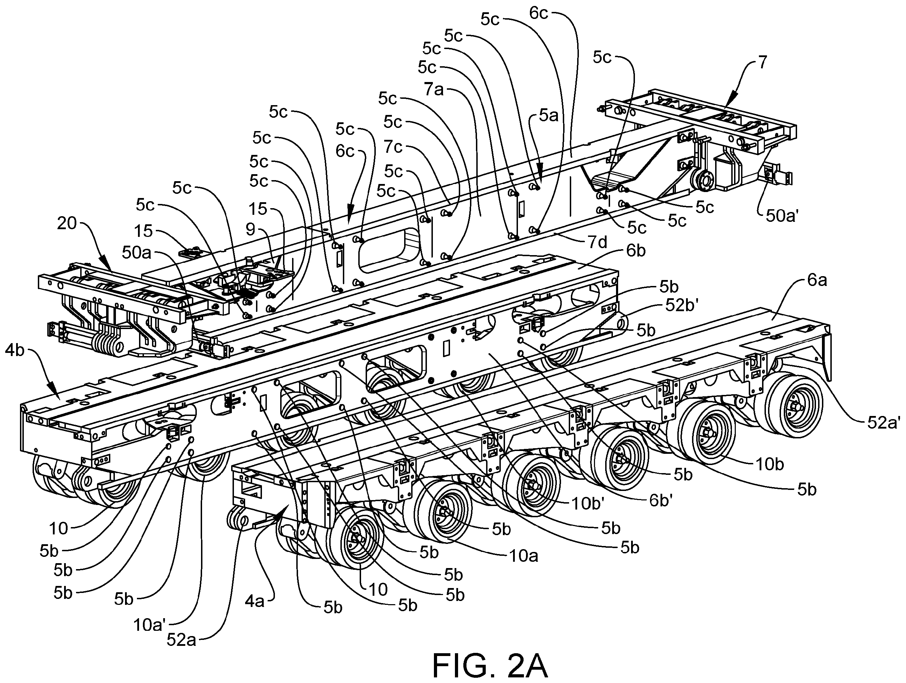

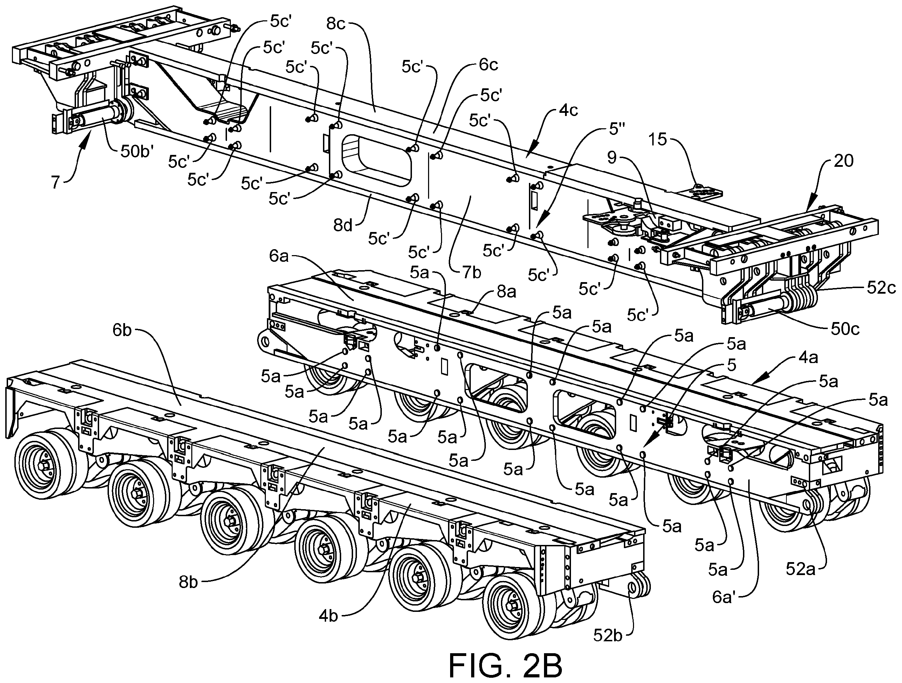

Wie am besten aus den Explosionsdarstellungen der Figuren 2a und 2b ersichtlich ist, weist das Fahrgestell 3 ein erstes Fahrgestellteil 4a und ein zweites Fahrgestellteil 4b auf, deren Aufbau - soweit erforderlich - weiter unten noch beschrieben wird.

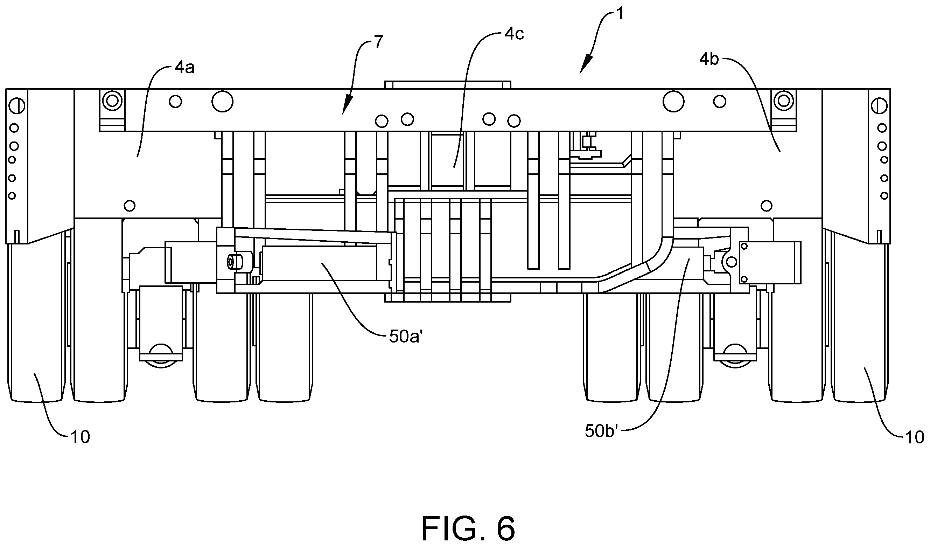

Das Fahrgestell 3 weist des Weiteren ein mittleres Fahrgestell 4c auf, an dem vorzugsweise die erste Kupplungsvorrichtung 20 sowie die weitere Kupplungseinrichtung 7 vorzugsweise abnehmbar angeordnet sind. Dieses mittlere Fahrgestellteil 4c dient nun der Verstellung der Breite und Spurweite des Transportfahrzeugs 1. Wie aus den Figuren 2a und 2b ersichtlich ist, weist das mittlere Fahrgestellteil 4c einen sich in Längsrichtung des Transportfahrzeugs 1 erstreckenden Träger 6a auf und besitzt eine Anzahl von mechanischen Verbindungselementen 5, mittels derer - wie nachstehend beschrieben - das erste Fahrgestellteil 4a und das zweite Fahrgestellteil 4b mit dem mittleren Fahrgestellteil 4c verbindbar sind. Der Träger 6c des mittleren Fahrgestellteils 4c ist vorzugsweise als Hohlkammerträger ausgebildet und weist - wie am besten aus den Figuren 2a und 2b sowie 6 ersichtlich ist - zwei Seitenflächen 7a und 7b sowie eine obere Fläche 7c und eine untere Fläche 7d auf. Bevorzugt wird, dass an der oberen Fläche 7c des Trägers 6c eine Lasttragfläche 8c angeordnet ist, welche zusammen mit einer Lasttragfläche 8a des ersten Fahrgestellteils 4a und einer Lasttragfläche 8b des zweiten Fahrgestellteils 4b eine Lasttragfläche 8 des Transportfahrzeugs 1 ausbilden. Hierbei wird bevorzugt, dass die Lasttragfläche 8c des mittleren Fahrgestellteils 4c - wie am besten aus der Figur 6 ersichtlich ist - über die obere Fläche 7c des mittleren Trägers 6c an mindestens einer und vorzugsweise an beiden Längsseiten hervorsteht und die beiden Lasttragflächen 8a und 8b des ersten und des zweiten Fahrgestellteils 4a und 4b gegenüber dem jeweiligen Rand der entsprechenden Fahrgestellteile 4a und 4b zurückgesetzt sind, so dass sich im montierten Zustand die Ränder der Lasttragfläche 8c jeweils auf einem in Längsrichtung verlaufenden Träger 6a bzw. 6b des ersten bzw. des zweiten Fahrgestellteils 4a bzw. 4b abstützen können. Des Weiteren kann auch vorgesehen sein, dass an der unteren Fläche 7d des mittleren Trägers 6c des mittleren Fahrgestells 4c eine Verstärkungsplatte 8d angeordnet ist, welche dazu dient, die Steifigkeit des mittleren Trägers 6c und somit des mittleren Fahrgestellteils 4c zu erhöhen.

Die seitlichen Träger 6b bzw. 6c des ersten bzw. zweiten Fahrgestellteils 4a bzw. 4b sind vorzugsweise jeweils innenliegenden seitlichen Ende der Fahrgestellteile 4a bzw. 4b angeordnet und weisen jeweils eine Seitenwand 6a' bzw. 6b' auf, so dass im montierten Zustand die Seitenwand 6a' des Trägers 6a des ersten Fahrgestellteils 4a an der Seitenwand 7a des Trägers 6c des mittleren Fahrgestellteils 4c anliegt oder zumindest benachbart zu dieser liegt. Entsprechendes gilt für die Seitenwand 6b' des Trägers 6b des zweiten Fahrgestellteils 4b.

Um eine mechanische Verbindung zwischen dem mittleren Fahrgestellteil 4c und den beiden äußeren Fahrgestellteilen 4a und 4b auszubilden, ist beim hier beschriebenen Ausführungsbeispiel vorgesehen, dass das erste Fahrgestellteil 4a an seiner dem mittleren Fahrgestellteil 4c zugewandten Seite eine Reihe von zu den Verbindungselementen 5 des mittleren Fahrgestellteils 4c komplementäre mechanische Verbindungselemente 5' besitzt, die hier als Aufnahmeöffnungen 5a ausgebildet sind. Diese ersten Aufnahmeöffnungen 5a sind in der Seitenwand 6a' des Trägers 6a angeordnet und durchsetzen diesen Träger 6a. In entsprechender Art und Weise weist das zweite Fahrgestellteil 4b an seiner dem mittleren Fahrgestellteil 4c zugewandten Seite weitere komplementäre mechanische Verbindungselemente 5" auf, die hier ebenfalls als zweite Aufnahmeöffnungen 5b ausgebildet sind, welche in der Seitenwand 6b' des Trägers 6b angeordnet sind. Das mittlere Fahrgestellteil 4c weist als mechanisches Verbindungselement eine Anzahl von aus seinen Seitenwänden 7a und 7b hervorstehenden Verbindungsbolzen 5c und 5c' auf, wobei die Anordnung der Verbindungsbolzen 5c derjenigen der Aufnahmeöffnungen 5a und die Anordnung der Verbindungsbolzen 5c' derjenigen der Aufnahmeöffnungen 5b entspricht. Zum Befestigen des ersten Fahrgestellteils 4a am mittleren Fahrgestellteil 4c werden die vom mittleren Fahrgestellteil 4c abstehenden Verbindungsbolzen 5c durch die Aufnahmeöffnungen 5a des ersten Fahrgestellteils 4a hindurchgeschoben und mittels eines entsprechenden Arretierelements wie z. B. einer Schraubenmutter, die auf ein am Ende der Verbindungsbolzen 5c angeordnetes Gewinde geschraubt werden kann, befestigt, so dass das erste Fahrgestellteil 4a derart am mittleren Fahrgestellteil 4c festgelegt ist. In entsprechender Art und Weise erfolgt die Befestigung des zweiten Fahrgestellteils 4b am mittleren Fahrgestellteil 4c, indem die vom mittleren Fahrgestellteil 4c abstehenden Verbindungsbolzen 5c' durch die Aufnahmeöffnungen 5b des zweiten Fahrgestellteils 4b geschoben und wiederum mittels entsprechender Arretiermittel, vorzugsweise ebenfalls durch eine Schraubverbindung, festgelegt werden.

Die Art und Weise der mechanischen Verbindung der beiden Fahrgestellteile 4a und 4b mit dem mittleren Fahrgestellteil 4c ist in weiten Grenzen variierbar, es ist nicht zwingend erforderlich, diese Verbindung - wie vorstehend beschrieben mittels Verbindungsbolzen 5c, 5c' mit korrespondierenden, fluchtende Aufnahmeöffnungen 5a bzw. 5b - auszugestalten. Es ist z. B. auch möglich, dass - um nur ein Beispiel zu nennen - das mittlere Fahrgestellteil 4c anstelle der Verbindungsbolzen 5c, 5c' Aufnahmeöffnungen aufweist, die mit den Aufnahmeöffnungen 5a und 5b des ersten und des zweiten Fahrgestellteils 4a und 4b fluchten, so dass durch zusammenwirkende, fluchtende Aufnahmeöffnungen der beiden äußeren Fahrgestellteile 4a und 4b und des mittleren Fahrgestellteils 4c jeweils ein Zuganker eingeschoben werden kann, die mit einer entsprechenden Länge auf beiden Seiten der äußeren Fahrgestellteile 4a und 4b überstehen, so dass mittels entsprechender Gewindemuttern die beiden äußeren Fahrgestellteile 4a und 4b mit dem mittleren Fahrgestellteil 4c verschraubt werden können. Erforderlichenfalls wird nicht nur die Länge der Zuganker verändert, sondern auch deren Durchmesser. Eine derartige Maßnahme besitzt den Vorteil, dass bei einer Beschädigung eines der die Fahrgestellteile 4a und 4b zusammenhaltenden Zugankers, z. B. bei einer Beschädigung eines Gewindegangs oder bei einem verbogenen Gewindeschaft des Zugankers, dieser einfach ersetzt werden kann. Weiterhin können durch diese Maßnahme größere Fertigungstoleranzen zugelassen und höhere Torsionskräfte übertragen werden.

Durch die vorstehend beschriebenen Maßnahmen sind somit die Fahrgestellteile 4a, 4b und 4c mittels der zusammenwirkenden Verbindungselemente 5 und 5' bzw. 5" mechanisch starr miteinander verbunden, wobei aber diese mechanische Verbindung einfach wieder gelöst werden kann. Das besitzt nun den Vorteil, dass die Breite und Spurweite des Transportfahrzeugs 1 in einfacher Art und Weise variiert werden kann, indem das eine Breite b1 aufweisende mittlere Fahrgestellteil 4c nach dem Lösen der wie vorstehend beschrieben hergestellten mechanischen Verbindung mit den beiden anderen Fahrgestellteilen 4a und 4b durch ein mittleres Fahrgestellteil 4c mit einer unterschiedlichen Breite b2, also einer unterschiedlichen Erstreckung in Querrichtung des Transportfahrzeugs 1 ausgetauscht wird.

Zur Verbreiterung des beschriebenen Transportfahrzeugs 1 ist daher lediglich der Austausch des als Träger ausgebildeten mittleren Fahrgestellteils 4c erforderlich, der einfach durchgeführt werden kann. Gegenüber dem bisher bekannten Transportfahrzeug 1, wie es eingangs beschrieben wurde, besitzt das hier erläuterte Transportfahrzeug 1 den Vorteil, dass zur Verstellung der Breite und Spurweite des Transportfahrzeugs 1 nun keine komplizierten mechanischen Konstruktionen wie z. B. hydraulisch teleskopierbare Querträger, erforderlich sind. Das beschriebene Transportfahrzeug 1 baut daher kostengünstig und ist aufgrund seiner einfachen Mechanik - es werden nur mechanische Verbindungsmittel wie z. B. Schraubverbindungen benötigt - wenig störanfällig.

Ein weiterer Vorteil der beschriebenen Maßnahmen besteht darin, dass hierdurch die Steifigkeit des Fahrgestells 3 des Transportfahrzeugs 1 verbessert wird, da das vorzugsweise massiv ausgebildete mittlere Fahrgestellteil 4c für eine mechanische Verstärkung des Fahrgestells 3 sorgt.

Gemäß einer optionalen Weiterbildung kann die Steifigkeit des Fahrgestells 3 noch erhöht werden, indem die am mittleren Fahrgestellteil 4c angeordnete Kupplungsvorrichtung 20 und/oder die weitere Kupplungseinrichtung 7 mechanisch mit einem und vorzugsweise mit beiden äußeren Fahrgestellteilen 4a, 4b verbunden werden. Hierzu ist beim beschriebenen Ausführungsbeispiel vorgesehen, dass - wie am besten aus den Figuren 2a und 2b ersichtlich ist - die Kupplungsvorrichtung 20 zwei Riegelzylinder 50a und 50b und die weitere Kupplungseinrichtung 7 zwei weitere Riegelzylinder 50a' und 50b' aufweisen. Das erste Fahrgestellteil 4a und das zweite Fahrgestellteil 4b weisen - wie am besten aus den Figuren 2a und 2b ersichtlich ist - Lamellenkupplungen 52a und 52a' bzw. 52b und 52b' auf. Durch ein Ausfahren der Riegelzylinder 50a und 50a' der Kupplungsvorrichtung 20 greifen deren Kolben in die Lamellenkupplungen 52a und 52b ein und verriegeln derart das mittlere Fahrgestellteil 4c mit den beiden äußeren Fahrgestellteilen 4a und 4b. Entsprechend erfolgt ein Verriegelungsvorgang bei der weiteren Kupplungseinrichtung 7: Durch ein Ausfahren der Kolben der Riegelzylinder 50a' und 50b' greifen deren Kolben in die Lamellenkupplungen 52a' und 52b', die am gegenüberliegenden Ende in den Fahrgestellteilen 4a und 4b angeordnet sind, ein. Die vorgenannten Maßnahmen bewirken eine weitere Erhöhung der Steifigkeit des Fahrgestells 3.

In den Figuren 2a und 2b ist noch ein dritter Riegelzylinder 50c dargestellt, der mit der Lamellenkupplung 52c zusammenwirkt und im hier beschriebenen Ausführungsbeispiel dazu dient, die in den Figuren 2a und 2b nicht gezeigte Zuggabel 21 der Kupplungsvorrichtung 20 anzukoppeln.

Dem Fachmann ist aus obiger Beschreibung ersichtlich, dass die beschriebenen Maßnahmen in weitem Umfang variiert werden können, ohne dadurch die Grundidee des beschriebenen Transportfahrzeugs 1, nämlich die Verstellung der Breite und Spurweite durch einen einfache Austausch des eine erste Breite b1 aufweisenden mittleren Fahrgestellteils 4c durch ein anderes mittleres Fahrgestellteil 4c mit einer zweiten Breite b2 bewerkstelligt werden kann. Es ist z. B. nicht erforderlich, dass das mittlere Fahrgestellteil 4c - wie insbesondere aus den Figuren 2a und 2b ersichtlich - nicht als einstückiger Träger ausgebildet sein, der sich durchgehend vom ersten zum zweiten Ende des Fahrgestells 3 erstreckt. Es ist nicht zwingend erforderlich, dass die Länge des Trägers 6c des mittleren Fahrgestellteils 4c der Länge der beiden anderen Fahrgestellteile 4a und 4b entspricht. Das mittlere Fahrgestellteil 4c bzw. dessen Träger 6c kann kürzer oder auch mindestens einer der beiden Fahrgestellteile 4a und 4b zumindest an einer Seite überragend ausgebildet sein.

Des Weiteren kann der Träger 6c des mittleren Fahrgestellteils 4c auch durch zwei oder mehrere Träger-Segmente ausgebildet sein, wobei die einzelnen Träger-Segmente vorzugsweise in Längsrichtung an ihren Enden miteinander mechanisch verbunden sind. Es ist aber auch möglich, dass anstelle eines einzigen Trägers 6c das mittlere Fahrgestellteil 4c mehrere in Längsrichtung des Transportfahrzeugs 1 hintereinander angeordnete Träger-Segmente aufweist, die voneinander beabstandet sind, so dass zwischen zwei benachbarten Träger-Segmenten des Trägers 6c im montierten Zustand ein Zwischenraum gegeben ist.

Des Weiteren kann die Verbreiterung des in den Figuren gezeigten mittleren Fahrgestellteils 4c derart erfolgen, dass an einer oder beiden Seitenflächen des Trägers 6c Zwischenelemente (nicht gezeigt) angeordnet sind, durch welche die Breite des mittleren Fahrgestellteils 4c vergrößert ist. Diese Zwischenelemente sind vorzugsweise auswechselbar mit dem Träger 6c des mittleren Fahrgestellteils 4c verbunden, so dass durch einen einfachen Austausch dieser Zwischenelemente der eine Breite b1 aufweisende, in den Figuren gezeigte Träger 6c in seiner Erstreckung quer zur Längsachse des Transportfahrzeugs 1 auf eine zweite Breite b2 verbreitert werden kann. Dem Fachmann ist ersichtlich, dass in diesem Fall die Länge und erforderlichenfalls der Durchmesser der Verbindungsbolzen 5c und/oder 5c' bzw. der Zuganker entsprechend angepasst werden muss.

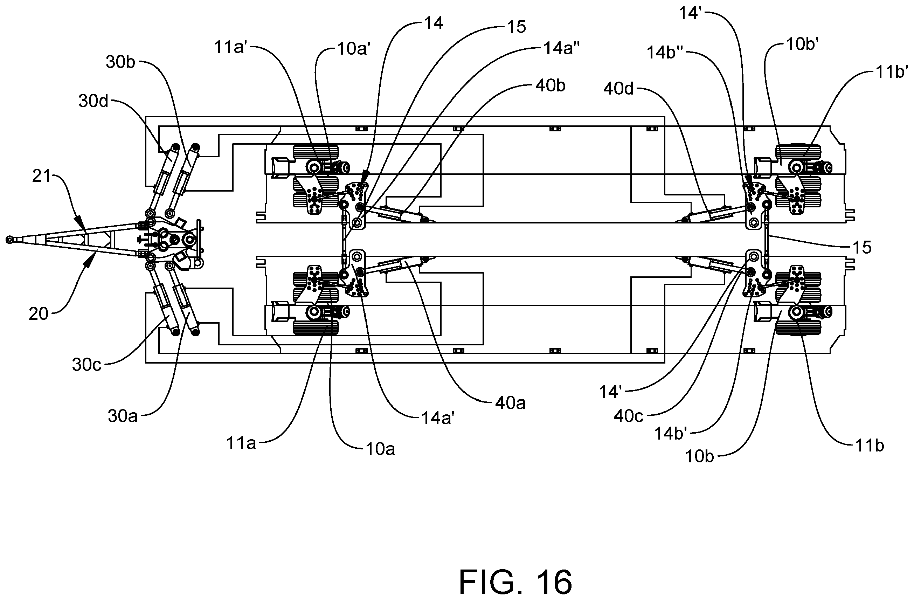

Wie insbesondere aus den Figuren 2a und 2b ersichtlich ist, weist der mittlere Träger 6c des mittleren Fahrgestellteils 4c eine Durchtrittsöffnung 9 auf, durch welche mechanische und/oder elektrische und/oder hydraulische und/oder pneumatische Steuer- und Kontrollelemente von einem Fahrgestellteil 4a bzw. 4b zum anderen Fahrgestellteil 4b bzw. 4a führbar sind. Als Beispiel für ein derartiges mechanisches Steuerelement ist eine Querspurstange 15 zu nennen, welche beispielsweise in Figur 16 gezeigt ist. Von Vorteil ist, dass die beiden Fahrgestellteile 4a und 4b - außer durch das mittlere Fahrgestellteil 4c und insbesondere dessen Träger 6c - nur durch die vorgenannten elektrischen und/oder mechanischen und/oder hydraulischen und/oder pneumatischen Steuer- und Kontrollelemente verbunden sind. Bei der Verstellung der Breite des Transportfahrzeugs 1 müssen somit, wenn überhaupt, lediglich diese Steuerelemente angepasst werden. Dem Fachmann ist aber ersichtlich, dass es nicht zwingend ist, nur eine einzige Durchtrittsöffnung 9 vorzusehen, vielmehr können - entsprechend den konstruktiven Erfordernissen - auch zwei oder mehr Durchtrittsöffnungen 9 vorgesehen sein, durch welche die vorgenannten Steuerelemente durchführbar sind.

Besonders vorteilhaft ist es, wenn das Transportfahrzeug 1 die nachstehend beschriebene Kupplungsvorrichtung 20 aufweist, welche - wie bereits ausgeführt - vorzugsweise am mittleren Fahrgestellteil 4c und insbesondere an dessen Träger 6c abnehmbar angeordnet ist. Diese Kupplungsvorrichtung 20 und deren Anordnung am mittleren Fahrgestellteil 4c besitzt den Vorteil, dass sie unabhängig von der aktuellen Breite des Transportfahrzeugs 1 eine aktive Lenkung desselben erlaubt: Das Transportfahrzeug 1 weist im hier beschriebenen Fall zwei aktive gelenkte Fahrwerke 10a, 10a' und 10b, 10b' auf, wobei die ersten Fahrwerke 10a und 10a' die oder eine der vorderen Achslinien und die zweiten aktiv gelenkten Fahrwerke 10b, 10b' die oder eine der hinteren Achslinien des Transportfahrzeugs 1 sind.

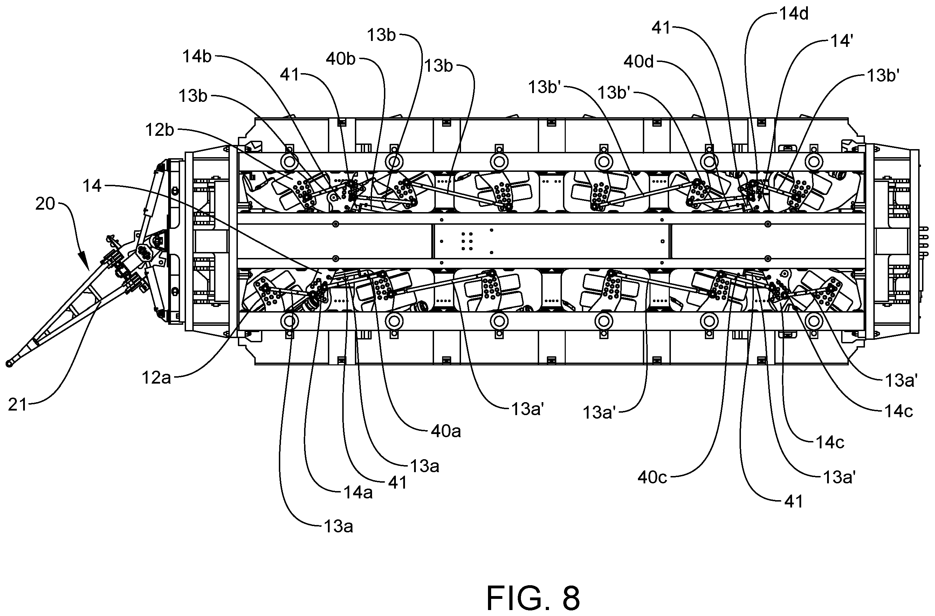

Man erkennt aus den Figuren 7 und 8, dass die beiden aktiven Fahrwerke 10a, 10a' sowie 10b und 10b' sowie auch sämtliche weiteren Fahrwerke 10 - passiv - lenkbar ausgebildet sind. Jedes Fahrwerk 10, 10a, 10a', 10b, 10b' weist jeweils eine Rad-Drehanordnung 11a, 11a' und 11b, 11b' auf, wobei die ersten Rad-Drehanordnungen 11a, 11b drehbar im ersten Fahrgestellteil 4a und die zweiten Rad-Drehanordnungen 11a', 11b' im zweiten Fahrgestellteil 4b angeordnet ist. Die Ausgestaltung derartiger Rad-Drehanordnungen 11a-11b' ist bekannt und muss daher nicht mehr näher beschrieben werden. Jede Rad-Drehanordnung 11a, 11b bzw. 11a', 11b' besitzt jeweils ein vorzugsweise als Lenkhebel ausgebildetes Lenkelement 12a, bzw. 12b, wobei die Lenkelemente 12a sowie die Lenkelemente 12b des ersten bzw. des zweiten Fahrgestellteils 4a bzw. 4b jeweils durch Längsspurstangen 13a bzw. 13b miteinander verbunden sind. Eine derartige Konstruktion ist in der DE 10 2012 024 247 B4 beschrieben und muss daher ebenfalls nicht im Detail erläutert werden.

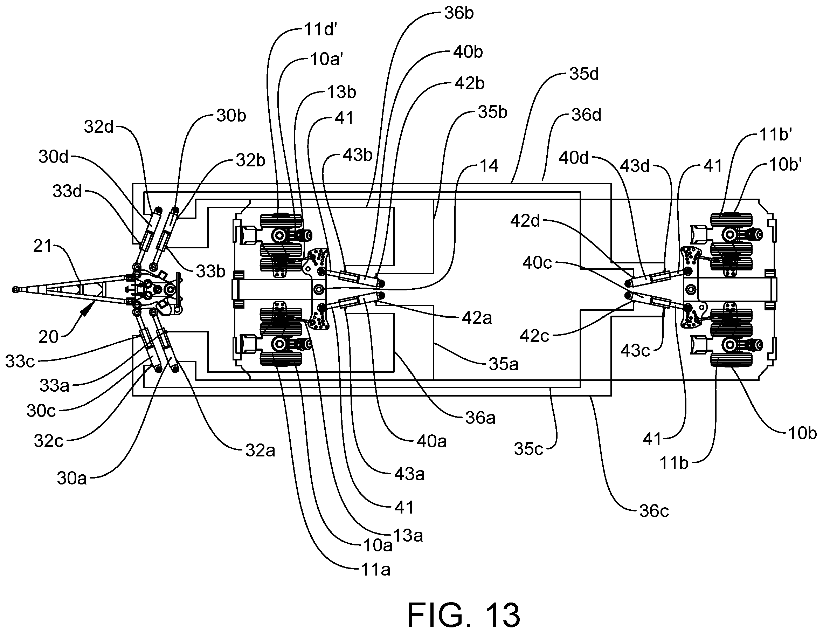

Um nun eine Schwenkbewegung der Zuggabel 21 in eine Schwenk- und somit Lenkbewegung der Rad-Drehanordnungen 11a-11b' umzusetzen, ist beim beschriebenen Ausführungsbeispiel vorgesehen, dass - wie nachstehend beschrieben - die Zuggabel 21 Steuerzylinder 30a-30d der Kupplungsvorrichtung 20 beaufschlagt und diese Steuerzylinder 30a-30d über in den Figuren 13 bis 15 gezeigten und weiter unten noch näher beschriebenen Hydraulikleitungen mit an den Fahrgestellteilen 4a, 4b angelenkten Lenkzylindern 40a-40d verbunden sind. Die Steuerzylinder 30a-30d werden nachstehend anhand der Beschreibung der Kupplungsvorrichtung 20 noch erläutert. Wie aus den Figuren 7 und 8 ersichtlich, greift der am kolbenseitigen Ende am ersten Fahrgestellteil 4a angelenkte erste Lenkzylinder 40a ringseitig an einer ersten Seite eines hier als Lenkplatte ausgeführten ersten Lenkelements 14a einer Lenkeinheit 14 an, welches mit dem hier als Lenkhebel ausgebildeten Lenkelement 12a der Rad-Drehanordnung 11a des ersten Fahrwerks 10a über eine Längsspurstange 13a und mit dem Lenkelement 12a der benachbart liegenden Rad-Drehanordnung 11a über eine weitere Längsspurstange 13a verbunden ist. In entsprechender Art und Weise greift der ebenfalls mit seinem kolbenseitigen Ende am zweiten Fahrgestellteil 4b angelenkte Lenkzylinder 40b an einer zweiten Seite des Lenkelements 14a der Lenkeinheit 14 und über eine Längsspurstange 13b am Lenkelement 12b des Fahrwerks 10a' an. In entsprechender Art und Weise greifen die dritten und vierten Lenkzylinder 40c und 40d mit ihren ringseitigen Enden an jeweils einer Seite eines hier als Lenkplatte ausgebildeten Lenkelements 14b einer weiteren Lenkeinheit 14' an den Lenkelementen 12a bzw. 12b der Rad-Drehanordnungen 11a bzw. 11b der zweiten Fahrwerke 10b, 10b' an.

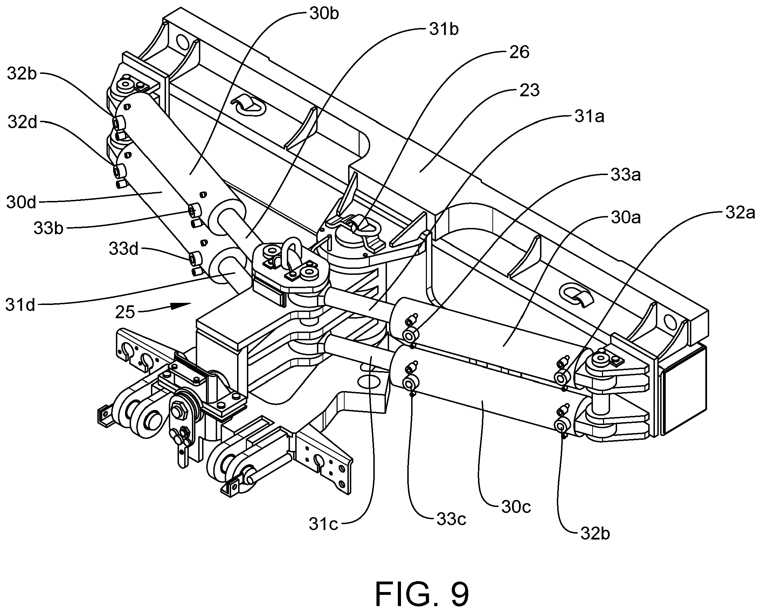

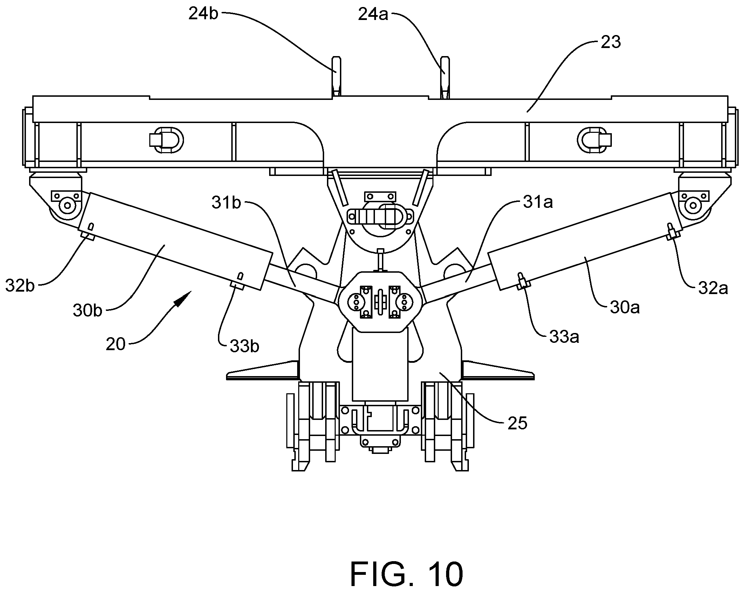

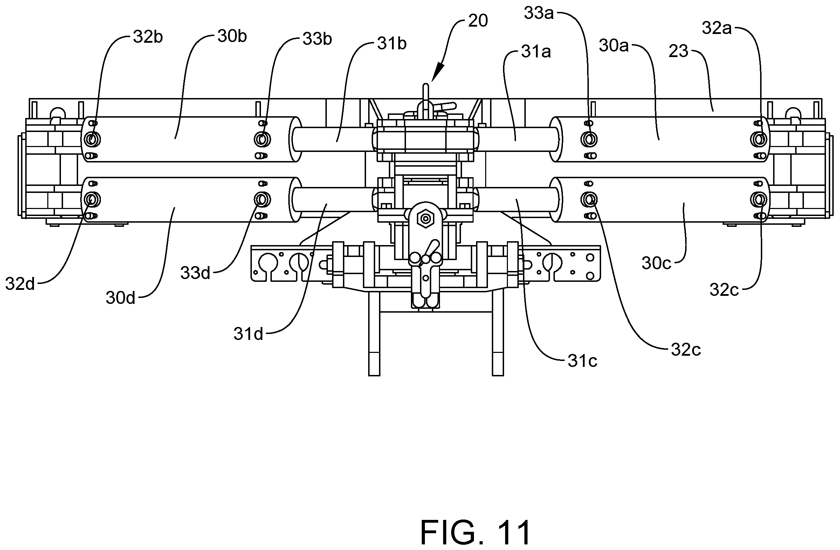

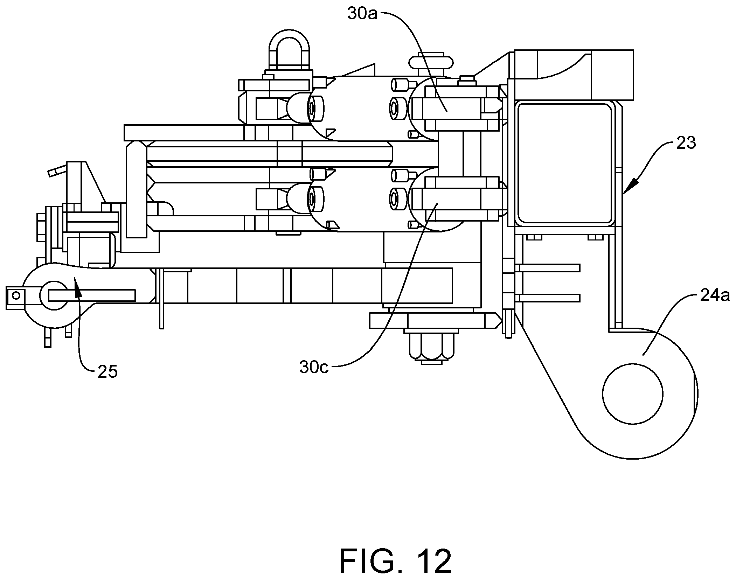

Die Ansteuerung dieser Lenkzylinder 40a-40d erfolgt nun durch die Steuerzylinder 30a-30d der Kupplungsvorrichtung 20, welche in den Figuren 9 bis 12 dargestellt ist. Die Kupplungsvorrichtung 20 weist einen Querbalken 23 auf, welcher über zwei Kupplungselemente 24a und 24b am Fahrgestell 3 befestigbar ist. Des Weiteren ist eine an und für sich bekannte und daher nicht mehr näher beschriebene Kupplungseinrichtung 25 vorgesehen, an welcher die Zuggabel 21 befestigbar und entlang eines Gelenks 26 verschwenkbar ist. Der erste Steuerzylinder 30a ist kolbenseitig am Querbalken 23 angelenkt und greift mit seiner Kolbenstange 31a an der Kupplungseinrichtung 25 an. In entsprechender Art und Weise ist der zweite Steuerzylinder 30b mit seinem kolbenseitigen Ende wiederum am Querbalken 23 angelenkt und seine Kolbenstange 31b ist mit der Kupplungseinrichtung 25 gelenkig verbunden. Die weiteren Steuerzylinder 30c und 30d greifen wiederum mit ihren kolbenseitigen Enden am Querbalken 24 an und ihre Kolbenstangen 31c und 31d sind an der Kupplungseinrichtung 25 angelenkt. Jeder Steuerzylinder 30a-30d weist eine kolbenseitige Anschlussöffnung 32a-32d und eine ringseitige Anschlussöffnung 33a-33d auf, an welcher die in den Figuren 9 bis 11 gezeigte Hydraulikleitungen angeschlossen sind, die wie nachstehend beschrieben zu den Lenkzylindern 40a-40d verlaufen: In Figur 13 ist eine erste Variante dargestellt, welche sich dadurch auszeichnet, dass die Fahrwerke 10a, 10a' der ersten Achslinie sowie die mit diesen über Längsspurstangen 13a, 13b gekoppelten weiteren Fahrwerke 10 und die Fahrwerke 10b, 10b' sowie die mit diesen Fahrwerken 10b, 10b' über die zweiten Längsspurstangen 13a', 13b' gekoppelten Fahrwerke 10 - wie aus der Figur 10 ersichtlich - in gegenläufigen Drehrichtungen ausgelenkt werden. Die kolbenseitige Anschlussöffnung 32a des ersten Steuerzylinders 30a ist über eine Hydraulikleitung 35a mit einer kolbenseitigen Anschlussöffnung 42a Lenkzylinders 40a verbunden. In entsprechender Art und Weise ist die kolbenseitige Anschlussöffnung 32b des zweiten Steuerzylinders 30b über eine Hydraulikleitung 35b mit einer kolbenseitigen Anschlussöffnung 42b des Lenkzylinders 40b verbunden. Die ringseitige Anschlussöffnung 33a bzw. 33b des ersten bzw. des zweiten Steuerzylinders 30a bzw. 30b ist mit einer ringseitigen Anschlussöffnung 43a bzw. 43b des Lenkzylinders 40a bzw. 40b über eine Hydraulikleitung 36a bzw. 36b verbunden. In entsprechender Art und Weise sind die kolbenseitigen Anschlussöffnungen 32c und 32d der Steuerzylinder 30c und 30d über Hydraulikleitungen 35c, 35d mit kolbenseitigen Anschlussöffnungen 42c, 42d der Lenkzylinder 40c und 40d der Fahrwerke 10b bzw. 10b' verbunden. Die ringseitigen Anschlussöffnungen 33c bzw. 33d der Steuerzylinder 30c bzw. 30d sind über Hydraulikleitungen 36c bzw. 36d mit den ringseitigen Anschlussöffnungen 43c, 43d der Lenkzylinder 40c, 40d verbunden.

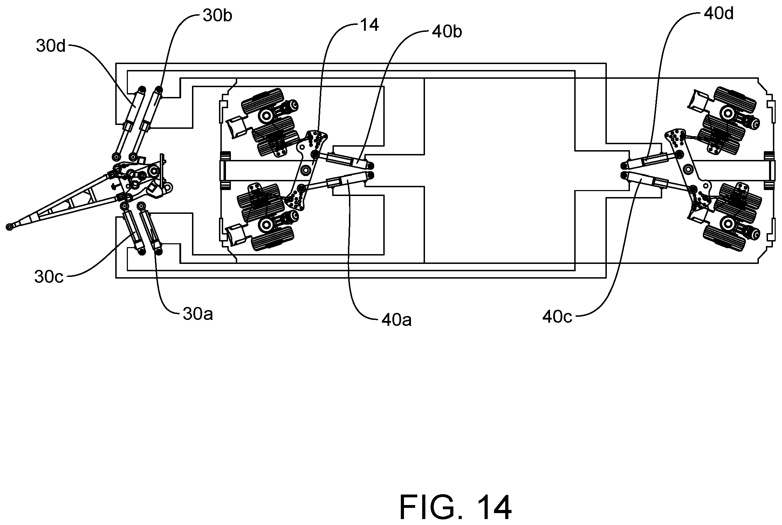

Wird nun die Zuggabel 21 - wie in den Figuren 7 und 8 gezeigt - von ihrer mittleren, neutralen Position (siehe Figur 7) in ihre in Fahrtrichtung gesehen linke Position (siehe Figur 8) ausgelenkt, so werden die Kolbenstangen 31a und 31c der Steuerzylinder 30a und 30c eingefahren, so dass ein in den Hydraulikleitungen 35a bzw. 35c fließendes Hydraulikmedium aus den kolbenseitigen Anschlussöffnungen 32a bzw. 32c austritt und jeweils über eine entsprechenden Hydraulikleitung 35a bzw. 35c zu den kolbenseitigen Anschlussöffnungen 42a bzw. 42c der Lenkzylinder 40a bzw. 40c strömt. Dies bewirkt, dass die Kolbenstangen 41 der Lenkzylinder 40a bzw. 40c ausgefahren werden, so dass die Rad-Drehanordnung 11a des Fahrwerks 10a und somit die Rad-Drehanordnungen 11a' des Fahrwerks 10a' zweiten Fahrgestellteils 4b - wie aus den Figuren 8 und 14 ersichtlich - entgegen dem Uhrzeigersinn gedreht werden. Gleichzeitig strömt Hydraulikmedium über die ringseitigen Anschlussöffnungen 33a und 33c der Lenkzylinder 40a und 40c über entsprechende Hydraulikleitungen zurück zu den ringseitigen Anschlussöffnungen 33a bzw. 33c des ersten bzw. des dritten Steuerzylinders 30a bzw. 30c.

Die Kolbenstangen 41 der Lenkzylinder 40b und 40d werden - wie aus einem Vergleich der Figuren 13 und 14 ersichtlich ist - eingefahren. Die Rad-Drehanordnungen 11b und 11b' der Fahrwerke 10b und 10b' schwenken somit in Uhrzeigersinn, also gegenteilig zur Drehrichtung der Fahrwerke 10a und 10a'.

Da - wie vorstehend beschrieben - eine erste Gruppe von Fahrwerken 10 über Längsspurstangen 13a, 13a' mit den Lenkelementen der Fahrwerke 10a, 10a' verbunden sind, so schwenken auch die Fahrwerke 10 dieser ersten Gruppe von Fahrwerken 10 gleichsinnig mit der Schwenk- und somit Lenkbewegung der Fahrwerke 10a, 10a'. Dies gilt in entsprechender Art und Weise die einer zweiten Gruppe von Fahrwerken 10 zuzuordnenden Fahrwerke 10, welche über Längsspurstangen 13b, 13b' mit den Fahrwerken 10b, 10b' verbunden sind.

Wird nun die Zuggabel 21 in ihre entgegengesetzte Richtung, also in Fahrtrichtung gesehen nach rechts, verschwenkt, so kehren sich die Strömungsverhältnisse in entsprechender Art und Weise um. Dies ist dem Fachmann klar ersichtlich und muss daher nicht mehr näher beschrieben werden.

Bei dem beschriebenen Transportfahrzeug 1 ist also vorgesehen, dass für jedes Paar von zusammenwirkenden Steuerzylindern und Lenkzylindern 30a, 40a bzw. 30b, 40b eines ersten Lenkkreises bzw. 30c, 40c bzw. 30d, 40d eines zweiten Lenkkreises ausgebildet werden. Dies besitzt den Vorteil, dass hierdurch gegenüber den aus dem Stand der Technik bekannten Transportfahrzeugen erhöhte Lenkkräfte in einfacher Art und Weise erreicht werden können.

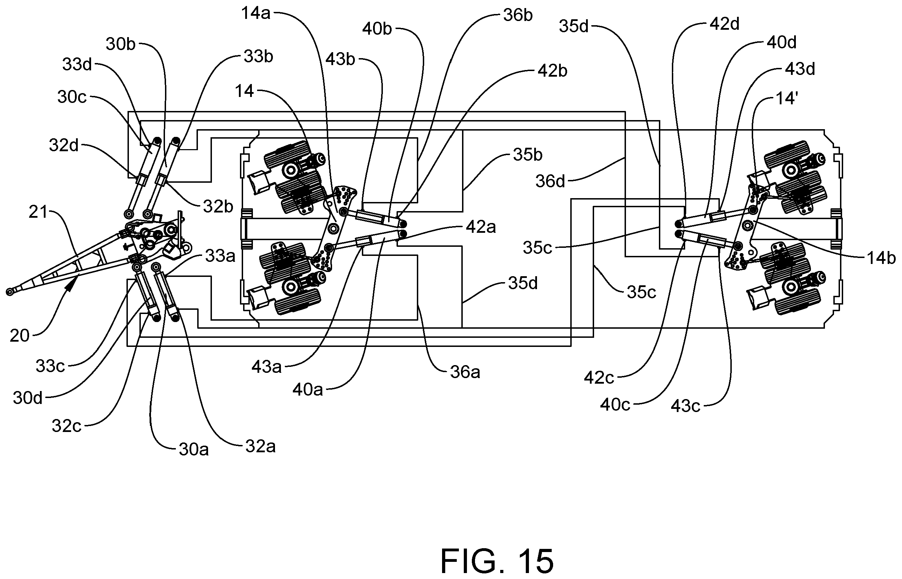

In Figur 15 ist eine zweite Variante der Ausbildung der beiden Lenkkreise des Transportfahrzeugs 1 dargestellt. Wie aus dieser Figur ersichtlich, wird durch die nachstehend beschriebene Ausbildung der Lenkkreise erreicht, dass sich die Fahrwerke 10 der ersten Gruppe von Fahrwerken, also diejenigen Fahrwerke 10, welche über Längsspurstangen 13a, 13b mit den aktiv gelenkten Fahrwerken 10a, 10a' verbunden sind, und die zweite Gruppe von Fahrwerke 10, also diejenigen Fahrwerke 10, welche mit den aktiv gelenkten Fahrwerken 10b, 10b' über Längsspurstangen 13a', 13b' verbunden sind, bei einer Schwenkbewegung der Zuggabel 21 gleichsinnig ausgelenkt werden.

Wie aus Figur 15 ersichtlich ist, entspricht die Führung der Hydraulikleitungen des ersten Lenkkreises derjenigen der in den Figuren 13 und 14 dargestellten ersten Variante. Bei der zweiten Variante gemäß Figur 16 ist dann die Leitungsführung der Hydraulikleitungen des zweiten Lenkkreises "gespiegelt": Die von den Steuerzylindern 30c, 30d abgehenden Hydraulikleitungen werden nun nicht zu den auf der gleichen Seite des Transportfahrzeugs 1 angeordneten Lenkzylindern 40c bzw. 40d geleitet. Die Hydraulikleitungen des Steuerzylinder 30c werden zu den entsprechenden Öffnungen des Lenkzylinders 40d und die Hydraulikleitungen des Steuerzylinders 30c zu dem Lenkzylinder 40c geleitet.

Die Figur 16 zeigt nun eine besonders vorteilhafte Ausgestaltung der als Lenkplatten ausgebildeten Lenkelemente 14a bzw. 14b der ersten bzw. der zweiten Lenkeinheit 14 bzw. 14', welche eine einfache Verstellung der Breite des Transportfahrzeugs 1 ermöglicht. Es ist vorgesehen, dass die Lenkelemente 14a und 14b nicht - wie bei der schematischen Darstellungen der Figuren 13 bis 15 - einteilig ausgeführt sind, sondern dass die Lenkelemente 14a bzw. 14b jeweils zwei separate Lenkelement-Teile 14a', 14a" bzw. 14b', 14b" aufweisen, die jeweils durch eine Querspurstange 15 verbunden sind. Durch eine einfache Änderung der Länge der Querspurstangen 15 kann die Breite des Transportfahrzeugs 1 und folglich die Spurweite einfach verstellt werden.

Zusammenfassend ist festzuhalten, dass durch die beschriebenen Maßnahmen ein Transportfahrzeug 1 mit variabler Breite und Spurweite geschaffen wird, welches sich dadurch auszeichnet, dass eine Veränderung der Breite und Spurweite des Transportfahrzeugs 1 durch einen einfachen Austausch des mittleren Fahrgestellteils 4c erreichbar ist. Dem Fachmann ist aus obiger Beschreibung ersichtlich, dass er bei einem Austausch des mittleren Fahrgestellteils 4c gegen ein anderes, insbesondere breiteres Fahrgestellteil 4c gegebenenfalls die weiteren oben beschriebenen Komponenten anpassen muss, z. B. die Querspurstange 15 und/oder die von einem Fahrgestellteil 4a zum anderen Fahrgestellteil 4b (oder umgekehrt) verlaufenden Steuer- und Kontrollelemente. Ein weiterer Vorteil dieser Maßnahme ist, dass hierdurch auch die Steifigkeit des Fahrgestells 3 verbessert und somit die Tragfähigkeit des Transportfahrzeugs 1 erhöht wird.

Des weiteren wird eine insbesondere für Transportfahrzeuge mit variabler Breite geeignete, aber nicht darauf beschränkte Lenkvorrichtung für ein Transportfahrzeug 1 mit mindestens zwei aktiven Lenkkreisen vorgeschlagen, welche sich dadurch auszeichnet, dass in einfacher Art und Weise eine erhöhte Lenkkraft erzielt wird. Dies wird in vorteilhafter Art und Weise einfach dadurch erreicht, dass für jeden aktiven Lenkkreis, also sowohl für die Fahrwerke 10a, 10a' als auch für die Fahrwerke 10b, 10b' jeweils ein separater Hydraulikkreislauf ausgebildet ist. Dies wird dadurch erreicht, indem ein Paar von zusammenwirkenden Steuerzylindern 30a und 30b sowie 30c und 30d nur ein Paar von zusammenwirkenden Lenkzylindern 40a und 40b sowie 40c und 40d mit Hydraulikfluid beaufschlagen.

## Patentansprüche

1. Transportfahrzeug, welches ein Fahrgestell (3) mit mindestens zwei Lenkachsen (10a, 10b) besitzt, wobei das Fahrgestell (3) mindestens zwei Fahrgestellteile (4a, 4b) umfasst, die jeweils eine Reihe von hintereinander angeordneten Fahrwerken (10a, 10b; 10a', 10b')jeweils mit mindestens einer Rad-Drehanordnung (11a, 11b; 11a', 11b') tragen, welche quer zu einer vertikalen Längsmittelebene des Transportfahrzeugs (1) verstellbar sind, und dass ein mittleres Fahrgestellteil (4c) vorgesehen ist, welches mit den beiden Fahrgestellteilen (4a, 4b) mechanisch verbunden ist, **dadurch gekennzeichnet, dass** das mittlere Fahrgestellteil (4c) auswechselbar im Transportfahrzeug (1) aufgenommen ist und einen in Längsrichtung des Transportfahrzeugs (1) verlaufenden Träger (6c) aufweist, und dass an mindestens einer und vorzugsweise an beiden Seitenflächen (7a, 7b) dieses Trägers (6c) Verbindungsmittel (5; 5c, 5c') vorgesehen sind, mittels derer mindestens das erste und/oder das zweite Fahrgestellteil (4a, 4b) über zu diesen Verbindungsmitteln (5; 5a, 5b) komplementäre Verbindungsmittel (5'; 5"; 5a, 5b) am mittleren Fahrgestellteil (4c) mechanisch festlegbar ist.

2. Transportfahrzeug nach Anspruch 1, **dadurch gekennzeichnet, dass** der Träger (6c) des mittleren Fahrgestellteils (4c) ein oder mehrere in Längsrichtung des Transportfahrzeugs (1) hintereinander angeordnete Träger-Segmente aufweist.

3. Transportfahrzeug nach einem der vorangehenden Ansprüche, **dadurch gekennzeichnet, dass** zur Verbreiterung des mittleren Fahrgestellteils (4c) an mindestens einer Seitenfläche (7a, 7b) des Trägers (6c) oder mindestens eines Träger-Segments dieses Trägers (6c) ein Zwischenelement auswechselbar angeordnet ist.

4. Transportfahrzeug nach einem der vorangehenden Ansprüche, **dadurch gekennzeichnet, dass** das mittlere Fahrgestellteil (4c) eine an einer oberen Fläche (7c) des Trägers (6c) angeordnete Transportfläche (8c) aufweist, wobei diese Transportfläche (8c) vorzugsweise an zumindest einer Seite über die obere Seitenfläche (7c) des mittleren Trägers (6c) hervorsteht.

5. Transportfahrzeug nach einem der vorangehenden Ansprüche, **dadurch gekennzeichnet, dass** der Träger (6c) des mittleren Fahrgestellteils (4c) zumindest eine Durchtrittsöffnung (9) aufweist, durch welche elektrische und/oder mechanische und/oder hydraulische und/oder pneumatische Steuer- und/oder Kontrollelemente eines der beiden Fahrgestellteile (4a, 4b) zum anderen Fahrgestellteile (4b, 4a) durchführbar sind.

6. Transportfahrzeug nach einem der vorangehenden Ansprüche, **dadurch gekennzeichnet, dass** an einer Querseite des Transportfahrzeugs (1) eine Kupplungsvorrichtung (20) mit einem in der Kupplungsvorrichtung (20) um eine Achse schwenkbar gelagerten Kupplungselemente (21) angeordnet ist, durch welche das Transportfahrzeug (1) an ein dieses bewegendes Zug- oder Schubfahrzeug ankoppelbar ist,

7. Transportfahrzeug nach Anspruch 6, **dadurch gekennzeichnet, dass** die Kupplungseinrichtung (20) an einem Ende des mittleren Fahrgestellteils (4c), vorzugsweise an einem Ende des mittleren Trägers (6c) des mittleren Fahrgestellteils (4c), angeordnet ist.

8. Transportfahrzeug nach einem der Ansprüche 6 oder 7, **dadurch gekennzeichnet, dass** die Kupplungsvorrichtung (20) mindestens vier Steuerzylinder (30a-30d) besitzt, wobei mindestens zwei Steuerzylinder (30a, 30c) mit ihrem ringseitigen Ende über Kolbenstangen (31a, 31c) an einer ersten Seite des verschwenkbaren Kupplungselements (21) und mit ihrem kolbenseitigen Ende mit der Kupplungsvorrichtung (20) und mindestens zwei Steuerzylinder (30b, 30d) mit ihrem ringseitigen Ende über Kolbenstangen (31b, 31d) mit einer zweiten Seite des verschwenkbaren Kupplungselements (21) und mit ihrem kolbenseitigen Ende mit der Kupplungsvorrichtung (20) verbunden sind, dass die beiden ersten Fahrwerke (10a, 10a') und die beiden zweiten Fahrwerke (10b, 10b') jeweils einen Lenkzylinder (40a, 40b; 40c, 40d) besitzen, wobei jeweils ein erster Lenkzylinder (40a bzw. 40c) an einer ersten Rad-Drehanordnung (11a bzw. 11b) und ein zweiter Lenkzylinder (40b bzw. 40d) jeweils an einer zweiten Rad-Drehanordnung (11a' bzw. 11b') angreifen, derart, dass jeweils ein kolbenseitiges Ende des entsprechenden Lenkzylinders (40a-40d) mit dem Fahrgestell (3) verbunden ist und ein ringseitiges Ende über eine entsprechende Kolbenstange (41) auf eine Lenkeinheit (14 bzw. 14') des entsprechenden Paars von Rad-Drehanordnung (11a, 11a', bzw. 11b, 11b') einwirkt, und dass jeweils eine kolbenseitige Anschlussöffnung (32a-32d) eines Steuerzylinders (30a-30d) mit einer kolbenseitigen Anschlussöffnung (42a-42d) des diesem Steuerzylinder (30a-30d) zugeordneten Lenkzylinders (40a-40d) und eine ringseitige Anschlussöffnung (43a-43d) dieses Lenkzylinders (40a-40d) mit einer ringseitigen Anschlussöffnung (33a-33d) dieses Steuerzylinders (30a-30d) über entsprechende Hydraulikleitungen (35a-35d, 36a-36d) verbunden ist.

9. Transportfahrzeug nach Anspruch 8, **dadurch gekennzeichnet, dass** mindestens ein an einer ersten Seite des Fahrgestells (3) angeordneter Steuerzylinder (30a, 30c; 30b, 30d) mit einem an der gleichen Seite des Fahrgestells (3) angeordneten Lenkzylinder (40a, 40c; 40b, 40d) hydraulisch verbunden ist.

10. Transportfahrzeug nach einem der vorangehenden Ansprüche, **dadurch gekennzeichnet, dass** mindestens ein Lenkelement (12a; 12b) einer Reihe von Rad-Drehanordnungen (11a; 11b) über eine Längsspurstange (13a; 13b) mit einer Rad-Drehanordnung (11a; 11b) eines weiteren Fahrwerks (10) verbunden ist.

11. Transportfahrzeug nach einem der vorangehenden Ansprüche, **dadurch gekennzeichnet, dass** die ersten Fahrwerke (10a, 10a') die vordere oder eine der vorderen Achslinien und/oder die zweiten Fahrwerke (10b, 10b') die hintere oder eine der hinteren Achslinien des Fahrgestells (3) des Transportfahrzeugs (1) ist.

12. Transportfahrzeug nach einem der vorangehenden Ansprüche, **dadurch gekennzeichnet, dass** das Transportfahrzeug (1) eine erste Gruppe von Fahrwerken (10) aufweist, die über Längsspurstangen (13a, 13b) mit den ersten Fahrwerken (10a, 10a') miteinander verbunden sind, und/oder dass das Transportfahrzeug (1) eine zweite Gruppe von Fahrwerken (10) aufweist, die über weitere Längsspurstangen (13a', 13b') mit den zweiten Fahrwerken (10b, 10b') verbunden sind.

13. Transportfahrzeug nach einem der vorangehenden Ansprüche, **dadurch gekennzeichnet, dass** mindestens ein weiteres Lenkelement (14a, 14b) vorgesehen ist, an welchem die Kolbenstange (41) eines Lenkzylinders (40a-40d) angreift, und dass mindestens zwei Rad-Drehanordnungen (11a; 11b) über mindestens zwei Längsspurstangen (13a; 13b) mit dem weiteren Lenkelement (14a; 14b) verbunden sind.

14. Transportfahrzeug nach einem der vorangehenden Ansprüche, **dadurch gekennzeichnet, dass** die Kupplungsvorrichtung (20) abnehmbar an dem Fahrgestell (3) angeordnet ist.

## Claims

1. Transport vehicle which has a chassis (3) having at least two steering axles (10a, 10b), wherein the chassis (3) comprises at least two chassis components (4a, 4b) which each carry a series of running gears (10a, 10b; 10a', 10b') which are arranged one behind the other, each having at least one wheel rotation arrangement (11a, 11b; 11a', 11b') which can be adjusted transversely relative to a vertical longitudinal centre plane of the transport vehicle (1), and in that a central chassis component (4c) which is mechanically connected to the two chassis components (4a, 4b) is provided, **characterised in that** the central chassis component (4c) is replaceably received in the transport vehicle (1) and has a carrier (6c) which extends in the longitudinal direction of the transport vehicle (1), and **in that** there are provided on at least one and preferably on both side faces (7a, 7b) of this carrier (6c) connection means (5; 5c, 5c'), by means of which at least the first and/or the second vehicle chassis component (4a, 4b) can be mechanically secured to the central chassis component (4c) by way of connection means (5'; 5''; 5a, 5b) which are complementary to these connection means (5; 5a, 5b).

2. Transport vehicle according to claim 1, **characterised in that** the carrier (6c) of the central chassis component (4c) has one or more carrier segments which are arranged one behind the other in the longitudinal direction of the transport vehicle (1).

3. Transport vehicle according to either of the preceding claims, **characterised in that** in order to expand the central chassis component (4c) at at least one side face (7a, 7b) of the carrier (6c) or at least one carrier segment of this carrier (6c) an intermediate element is replaceably arranged.

4. Transport vehicle according to any one of the preceding claims, **characterised in that** the central chassis component (4c) has a transport face (8c) which is arranged on an upper face (7c) of the carrier (6c), wherein this transport face (8c) preferably protrudes at at least one side beyond the upper side face (7c) of the central carrier (6c).

5. Transport vehicle according to any one of the preceding claims, **characterised in that** the carrier (6c) of the central chassis component (4c) has at least one through-opening (9) through which electrical and/or mechanical and/or hydraulic and/or pneumatic control and/or monitoring elements of one of the two chassis components (4a, 4b) can be introduced to the other chassis component (4b, 4a).

6. Transport vehicle according to any one of the preceding claims, **characterised in that** on a transverse side of the transport vehicle (1) there is arranged a coupling apparatus (20) which has a coupling element (21) which is pivotably supported in the coupling apparatus (20) about an axis and by means of which the transport vehicle (1) can be coupled to a towing or pushing vehicle which moves it.

7. Transport vehicle according to claim 6, **characterised in that** the coupling device (20) is arranged at one end of the central chassis component (4c), preferably at one end of the central carrier (6c) of the central chassis component (4c).

8. Transport vehicle according to either claim 6 or 7, **characterised in that** the coupling apparatus (20) has at least four control cylinders (30a-30d), wherein at least two control cylinders (30a, 30c) are connected with their ring-side end via piston rods (31a, 31c) to a first side of the pivotable coupling element (21) and with their piston-side end to the coupling apparatus (20) and at least two control cylinders (30b, 30d) are connected with their ring-side end via piston rods (31b, 31d) to a second side of the pivotable coupling element (21) and with their piston-side end to the coupling apparatus (20), **in that** the two first running gears (10a, 10a') and the two second running gears (10b, 10b') each have a steering cylinder (40a, 40b; 40c, 40d), wherein in each case a first steering cylinder (40a or 40c) engages on a first wheel rotation arrangement (11a or 11b) and a second steering cylinder (40b or 40d) engages on a second wheel rotation arrangement (11a' or 11b') in such a manner that in each case a piston-side end of the corresponding steering cylinder (40a-40d) is connected to the chassis (3) and a ring-side end acts via a corresponding piston rod (41) on a steering unit (14 or 14') of the corresponding pair of wheel rotation arrangements (11a, 11a' or 11b, 11b'), and **in that** in each case a piston-side connection opening (32a-32d) of a control cylinder (30a-30d) is connected to a piston-side connection opening (42a-42d) of the steering cylinder (40a-40d) which is associated with this control cylinder (30a-30d) and a ring-side connection opening (43a-43d) of this steering cylinder (40a-40d) is connected to a ring-side connection opening (33a-33d) of this control cylinder (30a-30d) by means of corresponding hydraulic lines (35a-35d, 36a-36d).

9. Transport vehicle according to claim 8, **characterised in that** at least one control cylinder (30a, 30c; 30b, 30d) which is arranged at a first side of the chassis (3) is hydraulically connected to a steering cylinder (40a, 40c; 40b, 40d) which is arranged at the same side of the chassis (3).

10. Transport vehicle according to any one of the preceding claims, **characterised in that** at least one steering element (12a; 12b) of a series of wheel rotation arrangements (11a; 11b) is connected to a wheel rotation arrangement (11a; 11b) of another running gear (10) by means of a longitudinal tie rod (13a; 13b).

11. Transport vehicle according to any one of the preceding claims, **characterised in that** the first running gears (10a, 10a') are the front or one of the front axle lines and/or the second running gears (10b, 10b') are the rear or one of the rear axle lines of the chassis (3) of the transport vehicle (1).

12. Transport vehicle according to any one of the preceding claims, **characterised in that** the transport vehicle (1) has a first group of running gears (10) which are connected to the first running gears (10a, 10a') by means of longitudinal tie rods (13a, 13b), and/or **in that** the transport vehicle (1) has a second group of running gears (10) which are connected to the second running gears (10b, 10b') by means of additional longitudinal tie rods (13a', 13b').

13. Transport vehicle according to any one of the preceding claims, **characterised in that** at least one additional steering element (14a, 14b) on which the piston rod (41) of a steering cylinder (40a-40d) engages is provided, and **in that** at least two wheel rotation arrangements (11a; 11b) are connected to the additional steering element (14a; 14b) by means of at least two longitudinal tie rods (13a; 13b).

14. Transport vehicle according to any one of the preceding claims, **characterised in that** the coupling apparatus (20) is removably arranged on the chassis (3).

## Revendications

1. Véhicule de transport comprenant un châssis (3) avec au moins deux essieux directeurs (10a, 10b), le châssis (3) comprenant au moins deux parties de châssis (4a, 4b) qui portent chacune une série de trains de roulement (10a, 10b ; 10a', 10b') agencés les uns derrière les autres et comportant chacun au moins un dispositif de rotation de roue (11a, 11b ; 11 a', 11 b') qui sont réglables transversalement par rapport à un plan longitudinal médian vertical du véhicule de transport (1), et en ce qu'il est prévu une partie centrale de châssis (4c) qui est reliée mécaniquement aux deux parties de châssis (4a, 4b), **caractérisé en ce que** la partie centrale de châssis (4c) est logée de manière interchangeable dans le véhicule de transport (1) et présente un support (6c) s'étendant dans le sens longitudinal du véhicule de transport (1) et **caractérisé en ce que** sont prévus des moyens de liaison (5 ; 5c, 5c') sur au moins une et de préférence sur les deux faces latérales (7a, 7b) de ce support (6c), au moyen desquels au moins la première et/ou la deuxième partie de châssis (4a, 4b) peuvent être fixées mécaniquement sur la partie centrale de châssis (4c) par l'intermédiaire de moyens de liaison (5' ; 5" ; 5a, 5b) complémentaires à ces moyens de liaison (5 ; 5a, 5b).

2. Véhicule de transport selon la revendication 1, **caractérisé en ce que** le support (6c) de la partie centrale du châssis (4c) présente un ou plusieurs segments de support agencés les uns derrière les autres dans la direction longitudinale du véhicule de transport (1).

3. Véhicule de transport selon l'une des revendications précédentes, **caractérisé en ce que**, pour élargir la partie centrale du châssis (4c), un élément intermédiaire est agencé de manière interchangeable sur au moins une face latérale (7a, 7b) du support (6c) ou au moins un segment de support de ce support (6c).

4. Véhicule de transport selon l'une des revendications précédentes, **caractérisé en ce que** la partie centrale du châssis (4c) présente une face de transport (8c) agencée sur une face supérieure (7c) du support (6c), cette face de transport (8c) faisant saillie de préférence sur au moins un côté au-delà de la face latérale supérieure (7c) du support central (6c).

5. Véhicule de transport selon l'une des revendications précédentes, **caractérisé en ce que** le support (6c) de la partie centrale du châssis (4c) présente au moins une ouverture de passage (9) à travers laquelle des éléments de commande et/ou de contrôle électriques et/ou mécaniques et/ou hydrauliques et/ou pneumatiques de l'une des deux parties du châssis (4a, 4b) peuvent être amenés vers l'autre partie du châssis (4b, 4a).

6. Véhicule de transport selon l'une des revendications précédentes, **caractérisé en ce qu'**un dispositif de couplage (20) est agencé sur un côté transversal du véhicule de transport (1), avec des éléments de couplage (21) montés de manière pivotante autour d'un axe dans le dispositif de couplage (20), grâce auxquels le véhicule de transport (1) peut être couplé à un véhicule tracteur ou poussoir qui le déplace.

7. Véhicule de transport selon la revendication 6, **caractérisé en ce que** le dispositif de couplage (20) est agencé à une extrémité de la partie centrale du châssis (4c), de préférence à une extrémité du support central (6c) de la partie centrale du châssis (4c).

8. Véhicule de transport selon l'une des revendications 6 ou 7, **caractérisé en ce que** le dispositif de couplage (20) comporte au moins quatre vérins de commande (30a-30d), au moins deux vérins de commande (30a, 30c) étant reliés par leur extrémité côté anneau, par l'intermédiaire de tiges de piston (31a, 31c), à un premier côté de l'élément de couplage pivotant (21) et par leur extrémité côté piston, au dispositif de couplage (20), et au moins deux vérins de commande (30b, 30d) étant reliés par leur extrémité côté anneau, via des tiges de piston (31b, 31d) à un deuxième côté de l'élément de couplage pivotant (21) et par leur extrémité côté piston au dispositif de couplage (20), de telle sorte que les deux premiers trains de roulement (10a, 10a') et les deux deuxièmes trains de roulement (10b, 10b') comportent chacun un vérin de direction (40a, 40b ; 40c, 40d), un premier vérin de direction (40a ou 40c) étant relié à un premier dispositif de rotation de roue (11a ou 11b) et un deuxième vérin de direction (40b ou 40d) étant relié à un deuxième dispositif de rotation de roue (11a' ou 11b'), de telle sorte qu'une extrémité côté piston du vérin de direction correspondant (40a-40d) est reliée au châssis (3) et qu'une extrémité côté anneau agit, par l'intermédiaire d'une tige de piston correspondante (41), sur une unité de direction (14 ou 14') de la paire correspondante de dispositifs de rotation de roue (11a, 11 a', ou 11b, 11 b') et **en ce qu'**une ouverture de raccordement (32a-32d) côté piston d'un vérin de commande (30a-30d) est reliée à une ouverture de raccordement (42a-42d) côté piston du vérin de direction (40a-40d) associé à ce vérin de commande (30a-30d) et une ouverture de raccordement côté anneau (43a-43d) de ce vérin de direction (40a-40d) est reliée à une ouverture de raccordement côté piston (33a-33d) de ce vérin de commande (30a-30d) par l'intermédiaire de conduites hydrauliques correspondantes (35a-35d, 36a-36d).

9. Véhicule de transport selon la revendication 8, **caractérisé en ce qu'**au moins un vérin de commande (30a, 30c ; 30b, 30d) sur un premier côté du châssis (3) est relié hydrauliquement à un vérin de direction (40a, 40c ; 40b, 40d) agencé sur le même côté du châssis (3).

10. Véhicule de transport selon l'une des revendications précédentes, **caractérisé en ce qu'**au moins un élément de direction (12a ; 12b) d'une rangée de dispositifs de rotation de roue (11a ; 11b) est relié, par l'intermédiaire d'une barre de couplage longitudinale (13a ; 13b) à un dispositif de rotation de roue (11a ; 11b) d'un autre train de roulement (10).

11. Véhicule de transport selon l'une des revendications précédentes, **caractérisé en ce que** les premiers trains de roulement (10a, 10a') sont l'essieu avant ou l'un des essieux avant et/ou les deuxièmes trains de roulement (10b, 10b') sont l' essieu arrière ou l'un des essieux arrière du châssis (3) du véhicule de transport (1).

12. Véhicule de transport selon l'une des revendications précédentes, **caractérisé en ce que** le véhicule de transport (1) présente un premier groupe de trains de roulement (10) qui sont reliés entre eux par l'intermédiaire de barres de couplage longitudinales (13a, 13b) avec les premiers trains de roulement (10a, 10a'), et/ou **en ce que** le véhicule de transport (1) présente un deuxième groupe de trains de roulement (10) qui sont reliés aux deuxièmes trains de roulement (10b, 10b') par l'intermédiaire d'autres barres de couplage longitudinales (13a', 13b').

13. Véhicule de transport selon l'une des revendications précédentes, **caractérisé en ce qu'**au moins un autre élément de direction (14a, 14b) est prévu, sur lequel agit la tige de piston (41) d'un vérin de direction (40a-40d), et **en ce qu'**au moins deux dispositifs de rotation de roue (11a; 11b) sont reliés à l'autre élément de direction (14a ; 14b) par l'intermédiaire d'au moins deux barres de couplage longitudinales (13a ; 13b).

14. Véhicule de transport selon l'une des revendications précédentes, **caractérisé en ce que** le dispositif de couplage (20) est agencé de manière amovible sur le châssis (3).
